# EUROPÄISCHE PATENTSCHRIFT

(11) **EP 0 993 872 B1**
(45) Veröffentlichungstag und Bekanntmachung des Hinweises auf die Patenterteilung: **13.11.2002**
(21) Anmeldenummer: 00101738.3
(22) Anmeldetag: 01.05.1997
(51) Int. Cl.: B05C 3/10, B05C 19/02, B05C 13/02, C03C 17/00

(54) **Vorrichtung zur Beschichtung von Glasbehältern**
Device for coating glass containers
Dispositif pour l'application d'un revêtement sur des récipients en verre

(30) Priorität: 07.05.1996 DE 19618206
(43) Veröffentlichungstag der Anmeldung: 19.04.2000
(62) Teilanmeldung aus: 97921843.5
(73) Patentinhaber: FIRMA HERMANN HEYE, D-31683 Obernkirchen (DE)
(72) Erfinder: Seidel, Hans-Georg, 31737 Rinteln (DE); Bögert, Hermann, 31749 Auetal (DE); Weiss, Gerhard, 31737 Rinteln (DE); Geisel, Gerhard, 31675 Bückeburg (DE); Bülow, Jürgen, 31655 Stadthagen (DE); Führ, Hans-Bernhard, 31655 Stadthagen (DE); Meyer, Henning, Dr., 31683 Obernkirchen (DE); Leone, Antonio, 31675 Bückeburg (DE)
(74) Vertreter: Callies, Rainer

(56) Entgegenhaltungen:
- DE-A- 2 655 411

## Beschreibung

Die Erfindung betrifft eine Vorrichtung gemäß dem Oberbegriff des Anspruchs 1.

Bei einer bekannten Vorrichtung dieser Art (EP 0 442 735 A2) werden zahlreiche Greifvorrichtungen an einem kontinuierlich umlaufenden Endlosförderer durch eine Beschichtungsanlage transportiert. Jede Greifvorrichtung ergreift an einer Aufnahmestelle eine quer zur Transportrichtung angeordnete Reihe Glasbehälter und führt die Reihe schräg nach oben, danach schräg nach unten, wo die Reihe in ein Bad mit flüssigem Beschichtungsmaterial getaucht wird, und anschließend wieder schräg nach oben auf ein oberes Niveau. Auf diesem Niveau durchläuft die Reihe eine Bodenaushärtezone und wird danach schräg nach unten geführt und auf einem Transportband abgesetzt. Auf dem Transportband durchläuft die Reihe eine Aushärtezone zur Aushärtung der bis dahin noch nicht ausgehärteten Teile der Schicht auf den Glasbehältern. Die entleerten Greifvorrichtungen werden am Rücktrum des Endlosförderers zur Aufnahmestelle zurücktransportiert. Alle Vorrichtungen sind an dem Endlosförderer fest montiert und bewegen sich daher ständig mit der gleichen Geschwindigkeit.

Auch aus der WO 94/17002 A1 ist es bekannt, zahlreiche Greifvorrichtungen an einem Endlosförderer durch die Beschichtungsanlage zu führen. Jede Greifvorrichtung ergreift vom Kühlofenband eine quer zur Transportrichtung angeordnete Reihe Glasbehälter. Jede Reihe wird schräg nach oben bewegt, dann schräg nach unten und in ein Bad mit flüssigem Beschichtungsmaterial getaucht und nach dem Verlassen des Bades zunächst auf einer schräg aufsteigenden und wieder schräg abfallenden Bahn durch eine Zone zur thermischen Alterung des Tauchüberzugs und sodann - wiederum in schrägen Auf- und Abwärtsbewegungen - durch eine Aushärtezone geführt und schließlich wieder auf dem Kühlofenband abgesetzt. Jede Greifvorrichtung weist zwei Greifleisten auf, die jeweils alle Glasbehälter der betreffenden Gruppe auf gegenüber liegenden Seiten unterhalb der Mündung ergreifen. Die beiden Greifleisten werden durch mehrere über ihre Länge verteilte Antriebsvorrichtungen synchron geöffnet oder geschlossen. Jede Antriebsvorrichtung weist einen an einem Basisteil montierten Zylinder einer Kolben-Zylinder-Einheit auf, dessen Kolbenstange am unteren freien Ende parallel zu den Greifleisten eine Stange trägt, die in senkrechten Schlitzen des Basisteils geführt ist. Betätigungsarme der Greifleisten erstrecken sich quer zu einer Längsachse der Greifleisten und sind jeweils um eine Achse des Basisteils, mit einem Langloch hoch- und abwärtsschwenkbar auf der Stange gelagert. Auch hier laufen alle Greifvorrichtungen ständig mit der gleichen Geschwindigkeit um.

Aus der DE 26 55 411 A1 ist eine andere Art der Beschichtung bekannt. Hier sind eine Vielzahl von Wagen in einer Transportebene auf Schienensegmenten unabhängig voneinander verfahrbar. Jeder Wagen weist quer zu einer Transportrichtung mehrere Greifeinheiten auf. In einer ersten Lücke zwischen Schienensegmenten nimmt eine Halterung einen leeren Wagen auf und schwenkt ihn abwärts zu einer Aufnahmestelle einer Temperiervorrichtung für reihenweise angeordnete Flaschen. Dort greifen die Greifeinheiten des Wagens eine Flaschenreihe. Die Halterung wird mitsamt dem gefüllten Wagen in die erste Lücke hochgeschwenkt. Von dort wird der Wagen über ein Schienensegment in ein in einer zweiten Lücke wartendes Hubwerk gefahren. Das Hubwerk wird mitsamt dem Wagen in senkrechter Richtung abgesenkt, bis die Flaschen in ein Wirbelbett aus Thermoplastpulver eintauchen. Sobald genügend Pulver an den Flaschen haftet, wird das Hubwerk hochgefahren und der Wagen mit der beschichteten Flaschenreihe in der zweiten Lücke auf ein Schienensegment geschoben. Auf diesem Schienensegment durchläuft der Wagen mit der Flaschenreihe nacheinander eine Durchwärmungskammer, eine Lüftungskammer und eine Sprühabschreckkammer. Danach wird die Flaschenreihe in einer Abgabestation durch Passivieren der Greifeinheiten abgegeben.

Aus der DE-Offenlegungsschrift 2 219 470 ist eine andere Beschichtungsvorrichtung an sich bekannt. An einem Kettenförderer sind in Abständen um eine waagerechte Achse heb- und senkbare Halter für jeweils eine Flasche angeordnet. In einer Hochstellung wird die Flasche vorgewärmt, dann in ein Fließbett aus Kunststoffteilchen abgesenkt und dann wieder in Hochstellung durch einen Schmelzofen bewegt.

Aus der US 4 022 155 A und der DE-Offenlegungsschrift 2 310 923 ist es an sich bekannt, Glasbehälter mit einer parallelogrammartigen Handhabungsvorrichtung an Greifvorrichtungen von einem ersten Förderband über eine Beschichtungsstation und nach dem Beschichten auf ein zweites Förderband weiterzuschwenken. Die Beschichtungsstation weist ein Wirbelbett auf, in das die Behälter eingetaucht werden. Das Wirbelbett enthält ein thermoplastisches Polymer.

Aus der DE 26 17 976 B2 ist eine besondere, glockenförmige Greifeinheit an sich bekannt. Innerhalb einer geschlossenen, äußeren Glocke ist mit einem Kolben eine längsgeschlitzte Federhülse verschiebbar geführt. An jeder Zunge der Federhülse befindet sich unten eine Greifklaue, die bei axialer Relativbewegung zwischen Federhülse und Glocke durch einen verschleißfesten Ring radial nach innen in formschlüssige Berührung mit dem Glasbehälter bewegt wird. Ein mit der Glocke starr verbundener Stopfen sitzt oben auf der Mündung oder dem Verschluß des Glasbehälters. Eine Druckfeder spannt die Greifklauen in ihre Greifposition vor. Die Greifklauen werden durch Druckluft in ihre Freigabeposition geführt. Die Druckluft wirkt auf die Oberseite des Kolbens der Federhülse.

Der Erfindung liegt die Aufgabe zugrunde, die Vorrichtung gemäß DE-A-26 55 411 zu verbessern.

Diese Aufgabe ist durch die Merkmale des Anspruchs 1 gelöst. Als Temperiervorrichtung kann z.B. der einer Glasformmaschine nachgeschaltete Kühlofen verwendet werden. Vor der Aufnahme durch die Greifvorrichtung können die Glasbehälter völlig unbeschichtet oder schon mit einer an sich bekannten Heißendvergütung versehen sein. Insbesondere kann der Träger im wesentlichen rechteckig ausgebildet sein. Die Gruppe ist dann z.B. eine rechteckige Matrix aus 15 Reihen und 40 Spalten, umfaßt also 600 Glasbehälter, die alle in einem Abstand voneinander angeordnet sind. Die Gruppen lassen sich nach der Beschichtung einfach und sicher auf dem Transportband absetzen. Die Aushärtung auf dem Transportband erfolgt besonders gleichmäßig und gut kontrollierbar. Gegebenenfalls wird die Bodenaushärtezone für die Bodenschicht der Glasbehälter vorgesehen, wenn es zweckmäßig erscheint, eine solche Bodenhärtung vorzuschalten, bevor die Glasbehälter auf dem Transportband abgesetzt werden. Jede Greifeinheit ist vorzugsweise mit vier Greifelementen versehen. Dies schafft die Möglichkeit, bei einer Anordnung der Greifeinheiten in einer vorerwähnten Matrix die Greifelemente bei minimalem Abstand der Greifeinheiten voneinander in geeignete Zwischenräume zwischen den Greifeinheiten zu bewegen. Die Kolben-Zylinder-Einheit ist vorzugsweise doppeltwirkend und pneumatisch betätigt. Anstelle eines Hoch- und Abwärtsschwenkens der Greifelemente können diese auch dadurch betätigt werden, daß sie relativ zu dem Rest der Greifeinheit linear bewegt werden.

Gemäß Anspruch 2 haftet an der anderen Greifvorrichtung im wesentlichen kein Beschichtungsmedium, das insbesondere in einer Bodenaushärtezone aushärten und die Greifvorrichtung verschmutzen und in ihrer Funktion beeinträchtigen könnte.

Gemäß Anspruch 3 läßt sich verhindern, daß in der Greifposition Beschichtungsmedium in den Innenraum des Greifelements gelangt.

Gemäß Anspruch 4 lassen sich die Greifelemente besonders einfach und funktionssicher bewegen.

Gemäß Anspruch 5 ist sichergestellt, daß bei Druckmediumausfall die Greifelemente in ihre Greifposition geschlossen werden.

Die Merkmale des Anspruchs 6 ermöglichen ein Ausweichen der Greifeinheit für den Fall, daß die Mündung eines Glasbehälters unzulässig stark exzentrisch angeordnet ist und ein geöffnetes Greifelement beim Niederfahren der Greifeinheit auf der Behältermündung aufsetzt.

Gemäß Anspruch 7 wird die Greifeinheit stets in die normale Betriebsstellung vorgespannt.

Die Merkmale des Anspruchs 8 bieten eine besonders einfache Drehsicherung.

Gemäß Anspruch 9 läßt sich die Greifeinheit bei Bedarf schnell auswechseln.

Die Merkmale des Anspruchs 10 erfüllen eine zweifache Funktion. Zum einen wird durch den Stopfen im normalen Betrieb die Mündung des Glasbehälters abgedichtet und so ein unerwünschtes Eindringen von Beschichtungsmedium in den Glasbehälter verhindert, und zum anderen dichtet der Stopfen die untere Greiföffnung der in der Greifposition befindlichen Greifelemente dann ab, wenn sich unterhalb dieser Greifeinheit einmal kein Glasbehälter befinden sollte., So wird auch in letzterem Fall verhindert, daß Beschichtungsmedium in das Innere der Greifeinheit gelangt.

Die Merkmale des Anspruchs 11 gewährleisten, daß der Stopfen seine Funktion auch bei Ausfall des zugehörigen Druckmediums erfüllen kann.

Das Druckmedium gemäß Anspruch 12 ist vorzugsweise Druckluft von z.B. 3 bar.

Gemäß Anspruch 13 wird als Spülgas insbesondere Luft mit einem Druck von z.B. 4900 Pa (500 mm WS) verwendet. Das Spülgas kühlt einerseits die Greifeinheit und verhindert oder mindert dadurch die Neigung von Beschichtungsmedium, an der Greifeinheit zu haften. Zum anderen entsteht durch das Spülgas ein Überdruck im Innenraum der Greifeinheit, wodurch das Eindringen von Beschichtungsmedium in die Greifeinheit erschwert oder verhindert wird.

Gemäß Anspruch 14 ergibt sich eine bauliche und betriebliche Vereinfachung. Bei der Anzahl von Greifeinheiten handelt es sich vorzugsweise um sämtliche Greifeinheiten einer Spalte in der vorerwähnten Matrix. Eine solche Spalte weist z.B. 15 im Abstand voneinander angeordnete Greifeinheiten auf.

Die Merkmale des Anspruchs 15 sind konstruktiv besonders günstig.

Gemäß Anspruch 16 wird verhindert, daß von den Greifelementen gegebenenfalls abfallendes Beschichtungsmedium auf die an den Greifelementen hängenden Glasbehälter fällt, was zu einer ungleichmäßigen Beschichtung führen könnte.

Gemäß Anspruch 17 ergibt sich eine besonders gleichmäßige und wirtschaftliche Beschichtung. Mehr als einen Behälter verwendet man dann, wenn die Betriebsumstände dies erfordern.

Der Behälter gemäß Anspruch 18 gewährleistet einen sicheren Beschichtungsbetrieb. Die Luftkammer ist vorzugsweise in Zellen unterteilt, um eine möglichst gleichmäßige Luftversorgung über die Querschnittsfläche des Wirbelsinterbetts zu gewährleisten. Die poröse Platte ist von solcher Porosität, daß zwar die Luft von unten nach oben durchgelassen wird, im Gegenzug aber Pulverpartikel nicht durch die Platte hindurchdringen können. Die poröse Platte ist z.B. als Bronze- oder Kunststoff-Sinterplatte ausgeführt.

Der Scherbenkorb gemäß Anspruch 19 dient dazu, Glasbehälter oder Scherben, die in das Wirbelsinterbett gefallen sind, leicht wieder aus dem Wirbelsinterbett entfernen zu können.

Gemäß Anspruch 20 kann die Umgebung des Behälters wirkungsvoll frei von Pulverresten gehalten werden.

Die Merkmale des Anspruchs 21 können im Vergleich zu Pulver als Beschichtungsmedium zu konstruktiven Vereinfachungen führen.

Die Merkmale des Anspruchs 22 bieten betriebliche Vorteile. Die Eintauchtiefe der Greifeinheiten soll möglichst gering gehalten werden. damit möglichst wenig Beschichtungsmedium an den Greifeinheiten haften und in die Glasbehälter und die Umgebung gelangen kann.

Gemäß Anspruch 23 ergibt sich eine besonders schnelle und sichere Beschichtung. Zum Beispiel kann einerseits beim Eintauchen der Glasbehälter kurz vor der Berührung des Spiegels des Beschichtungsmediums durch die Glasbehälterböden und andererseits beim Ausheben der Glasbehälter kurz bevor die Behälterböden den Spiegel wieder verlassen, die Geschwindigkeit konstant gehalten werden. Insbesondere soll verhindert werden, daß Beschichtungsmedium durch die Eintauch- und Aushebebewegungen der Glasbehälter und der Greifeinheiten übermäßig aufgewirbelt wird und unkontrolliert in die Umgebung gelangt.

Durch die Merkmale des Anspruchs 24 lassen sich Beschichtungsmediumreste sammeln und gegebenenfalls in den Prozeß zurückführen.

Die Heizvorrichtung gemäß Anspruch 25 kann z.B. als elektrische Widerstandsheizung mit einem kreisförmigen Heizteller oder als ringförmiger Gasbrenner ausgebildet sein.

Gemäß Anspruch 26 läßt sich einerseits Heizenergie sparen und andererseits ein unerwünschtes Aufheizen der betreffenden Greifeinheiten verringern.

Die Merkmale des Anspruchs 27 empfehlen sich insbesondere dann, wenn die Bodenschicht vor dem Absetzen der Glasbehälter auf dem Transportband nicht ausgehärtet wird. Das Transportband kann z.B. ähnlich einem Maschendraht ausgebildet sein.

Gemäß Anspruch 28 kann ein Anhaften der Böden der Glasbehälter an dem Transportband verhindert oder stark gemindert werden. Das Trennmittel kann z.B. flüssig auf das Transportband aufgesprüht werden.

Die Merkmale jedes der Ansprüche 29 und 30 bieten eine bessere Raumausnutzung und Schutz vor unkontrollierbarem Umfallen von Glasbehältern.

Diese und weitere Merkmale und Vorteile der Erfindung werden nachfolgend anhand der in den Zeichnungen dargestellten Ausführungsbeispiele näher erläutert. Es zeigt:
Fig. 1 eine schematische Seitenansicht einer ersten Ausführungsform der Beschichtungsvorrichtung,
Fig. 2 eine schematische Seitenansicht einer anderen Ausführungsform der Beschichtungsvorrichtung,
Fig. 3 die Draufsicht auf die Vorrichtung gemäß Fig. 2,
Fig. 4 die Ansicht gemäß Linie IV-IV in Fig. 1 in vergrößerter Darstellung,
Fig. 5, 6 und 7 jeweils einen Längsschnitt durch eine Greifeinheit der Vorrichtung in unterschiedlichen Betriebssituationen,
Fig. 8 die Ansicht gemäß Linie VIII-VIII in Fig. 5,
Fig. 9 die Ansicht gemäß Linie IX-IX in Fig. 5,
Fig. 10 die Schnittansicht gemäß Linie X-X in Fig. 5,
Fig. 11 die Schnittansicht nach Linie XI-XI in Fig. 7,
Fig. 12 die Schnittansicht nach Linie XII-XII in Fig. 8,
Fig. 13 die Schnittansicht nach Linie XIII-XIII in verkleinerter Darstellung,
Fig. 14 die Ansicht gemäß Linie XIV-XIV in Fig. 6,
Fig. 15 die Schnittansicht nach Linie XV-XV in Fig. 5,
Fig. 16 einen Längsschnitt durch einen Randbereich eines Wirbelsinterbetts,
Fig. 17 eine schematische Draufsicht auf ein Heizregister zur Aushärtung der Bodenschicht der Glasbehälter,
Fig. 18 die Draufsicht auf einen Teil eines die beschichteten Glasbehälter aufnehmenden Transportbands,
Fig. 19 eine schematische Seitenansicht einer weiteren Ausführungsform der Beschichtungsvorrichtung,
Fig.20 ein besonderes Stellschema für die Glasbehälter und
Fig. 21 einen Längsschnitt durch eine Absetzplatte für eine Gruppe der Glasbehälter.

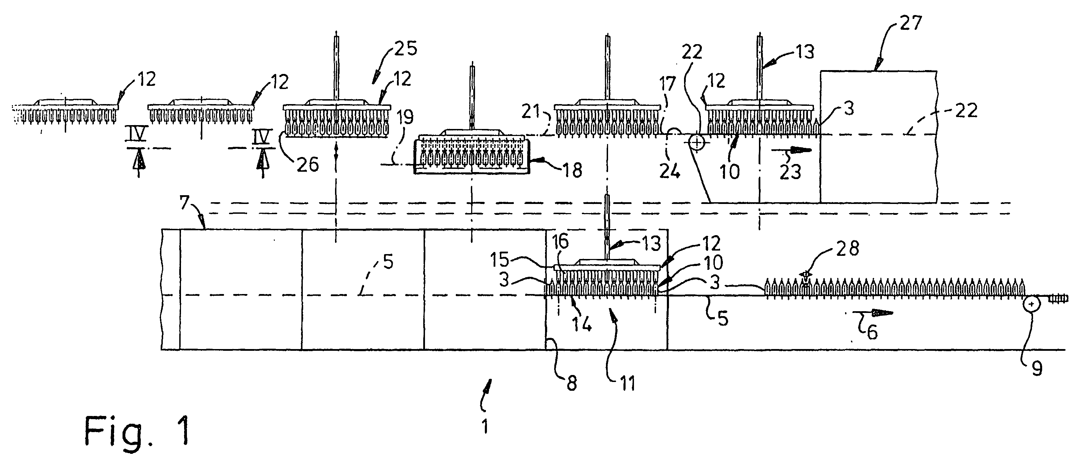

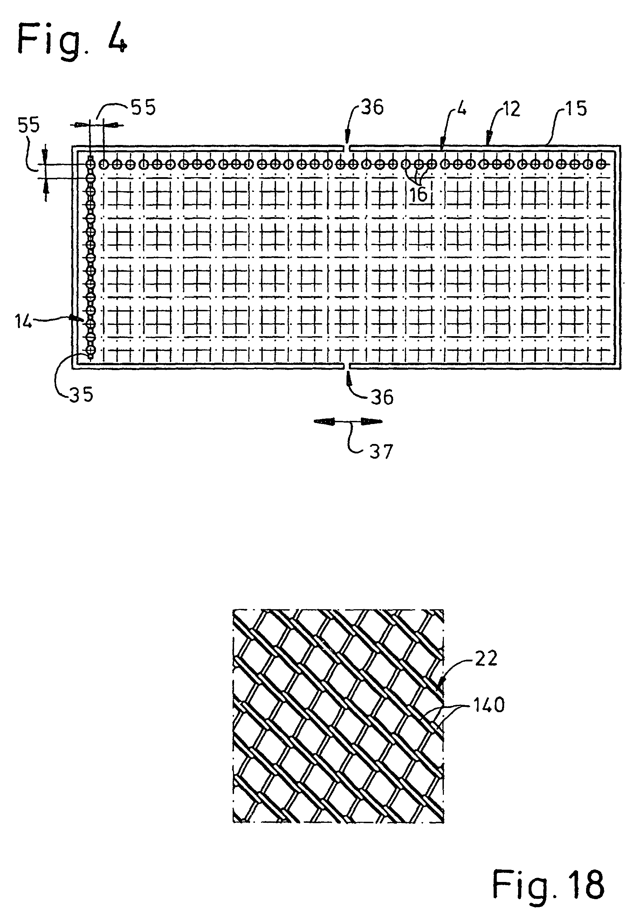

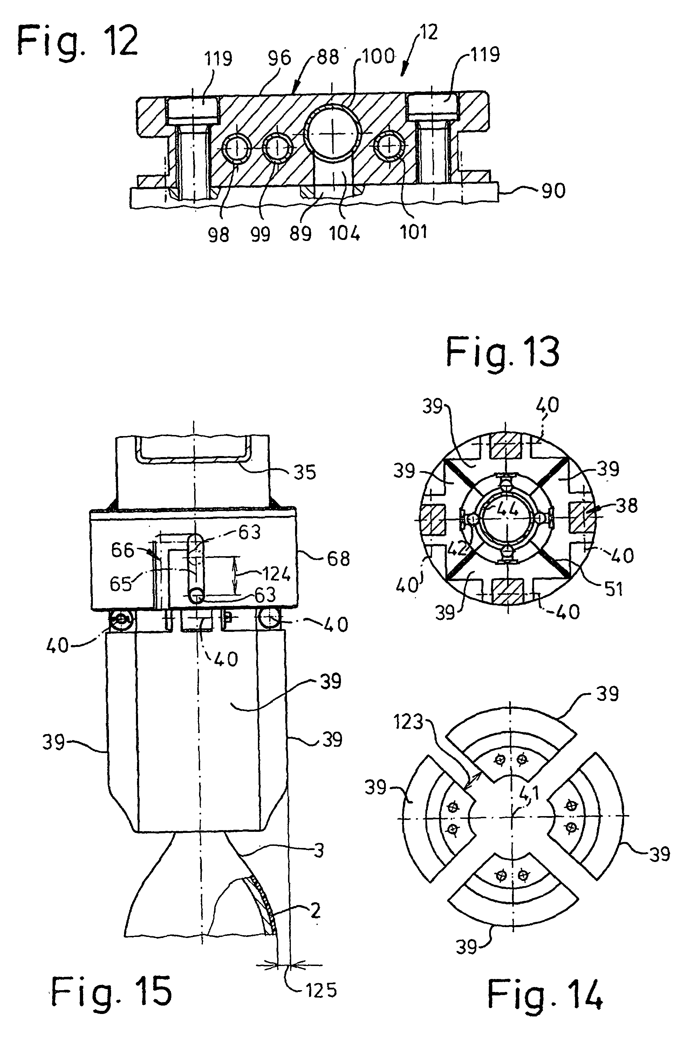

Fig. 1 zeigt eine Vorrichtung 1 zur Aufbringung einer Schicht 2 (Fig. 15) auf einen Teil der Außenfläche von Glasbehältern 3. Die Glasbehälter 3 werden in einer nicht gezeichneten Glasformmaschine hergestellt und z.B. in 40 zueinander parallelen Spalten 4 (Fig. 4) auf ein Kühlofenband 5 geschoben. Ein Obertrum des endlosen Kühlofenbands 5 bewegt sich kontinuierlich in einer Transportrichtung 6. Das Kühlofenband 5 durchläuft zunächst einen Kühlofen 7 bis zu einem hinteren Ende 8 des Kühlofens 7 und läuft dann weiter bis zu einer Umlenkstelle 9, von der es zum vorderen Ende des Kühlofens 7 zurückgeführt wird.

Bei den Glasbehältern 3 handelt es sich insbesondere um Flaschen, die vor ihrem Eintritt in den Kühlofen 7 mit einer sogenannten Heißendvergütung versehen werden. Dabei handelt es sich um eine Zinnoxid- oder Zinndioxidschicht, die in gasförmiger Phase auf die Glasbehälter 3 aufgebrächt wird. Dies geschieht zumeist im sogenannten CVD (Chemical Vapor Deposition)-Verfahren. Die Heißendvergütung hat anorganische Eigenschaften. Auf dieser oxidischen Oberfläche haftet die nachfolgend erfindungsgemäß aufzubringende Schicht gleichgut wie auf der ebenfalls oxidischen frischen Glasoberfläche, die zuvor nicht mit einer Heißendvergütung versehen wurde. Erfindungsgemäß können also sowohl Glasbehälter 3 mit Heißendvergütung als auch Glasbehälter 3 ohne Heißendvergütung mit gleichem Erfolg beschichtet werden.

Der Kühlofen 7 bildet eine Temperiervorrichtung, an deren hinterem Ende 8 die Glasbehälter 3 alle eine möglichst gleiche Temperatur im Bereich von 100 bis 160° C aufweisen.

Gleich hinter dem hinteren Ende 8 des Kühlofens 7 wird eine Gruppe 10 der Glasbehälter 3 an einer Aufnahmestelle 11 durch eine Greifvorrichtung 12 einer Handhabungsvorrichtung 13 gegriffen. Während dieses Greifvorgangs läuft das Kühlofenband 5 in der Transportrichtung 6 weiter. Deshalb wird die Handhabungsvorrichtung 13 während der Abnahme der Gruppe 10 vom Kühlofenband 5 in nicht dargestellter Weise überlagert in der Transportrichtung 6 und nach oben gefahren. So kann die Gruppe 10 aufgenommen werden, ohne daß die auf dem Kühlofenband 5 nachrückenden Glasbehälter 3 dadurch beeinträchtigt würden.

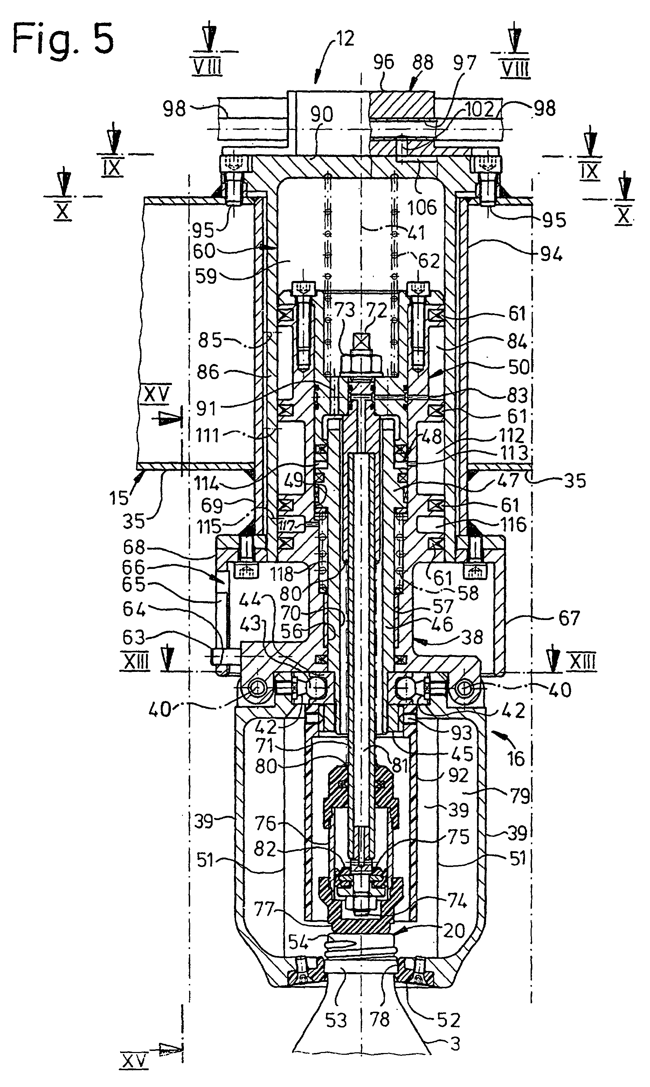

In dem dargestellten Ausführungsbeispiel besteht die Gruppe 10 aus einer Matrix von 40 Spalten 4 (Fig. 4) und 15 Reihen 14, also insgesamt 600 Glasbehältern 3. Die Greifvorrichtung 12 weist einen Träger 15 auf, der entlang einer im einzelnen nicht gezeichneten Bahn der Handhabungsvorrichtung 13 bewegbar ist. An dem Träger ist für jeden Glasbehälter 3 der Gruppe 10 eine Greifeinheit 16 angeordnet, deren Einzelheiten im Zusammenhang mit den Fig. 5 bis 15 erläutert werden.

Von der Aufnahmestelle 11 wird die Gruppe 10 durch die Handhabungsvorrichtung 13 in im wesentlichen senkrechter Richtung auf ein erstes Niveau 17 angehoben, sodann in waagerechter Richtung in Fig. 1 nach links über einen Behälter 18 transportiert und schließlich in senkrechter Richtung auf ein zweites Niveau 19 in dem Behälter 18 abgesenkt. Der Behälter 18 enthält ein Pulver als Beschichtungsmedium für die Glasbehälter 3 und bildet mit diesem Pulver ein Wirbelsinterbett.

Normalerweise umgreifen die Greifeinheiten 16 eine Mündung 20 (Fig. 5) des zugehörigen Glasbehälters 3 und verhindern, daß die Mündung 20 mit dem Pulver beschichtet wird. Um eine vollständige Beschichtung des Rests der Glasbehälter 3 zu gewährleisten, werden nicht nur die Glasbehälter 3, sondern auch ein unterer, z.B. maximal 20 mm hoher Bereich der Greifeinheiten 16 in das Pulver in dem Behälter 18 eingetaucht. Die Eintauchdauer beträgt z.B. von > 0 s bis < 5 s, bis genügend Pulver an der erhitzten Oberfläche des Glasbehälters 3 haftet. Die Gruppe 10 wird sodann durch die Handhabungsvorrichtung 13 von dem zweiten Niveau 19 auf ein drittes Niveau 21 angehoben und anschließend in waagerechter Richtung, in Fig. 1 nach rechts, über ein Transportband 22 transportiert. Zweckmäßigerweise wird das dritte Niveau 21 gleich dem ersten Niveau 17 gemacht.

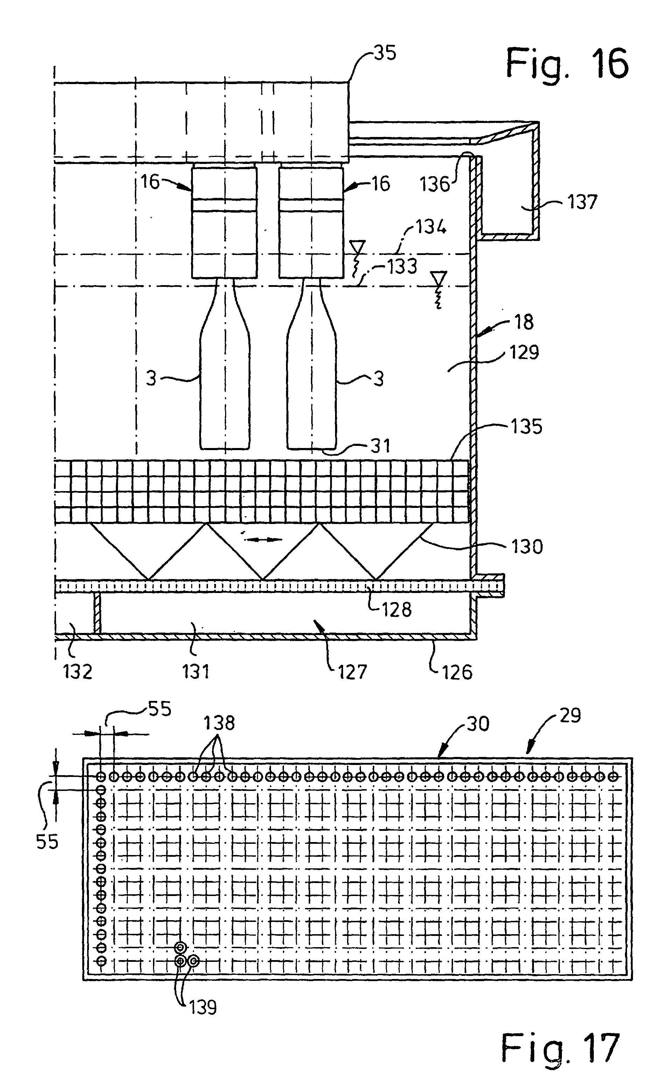

Ein Obertrum des Transportbands 22 läuft vorzugsweise ständig in einer Transportrichtung 23, normalerweise parallel zu der Transportrichtung 6 des Kühlofenbands 5. Vorzugsweise wird die Handhabungsvorrichtung 13 in dieser Abgabestellung oberhalb des Transportbands 22 nicht nur in senkrechter Richtung, sondern überlagert auch in der Transportrichtung 23 bewegt, während die Greifvorrichtung 12 passiviert wird und die Gruppe 10 an das Transportband 22 übergibt. Auf diese Weise werden die Glasbehälter 3 standsicher auf das Transportband 22 abgegeben. An dieser Abgabestelle kann eine nicht gezeichnete Absaugevorrichtung für überschüssig anhaftendes Beschichtungsmedium vorgesehen sein. Vor der Übernahme der Glasbehälter 3 kann das Transportband 22 in nicht gezeichneter Weise mit einem Trennmittel versehen werden, das ein Anhaften der Behälterböden 31 (Fig. 16) verringert oder verhindert.

Die von den Glasbehältern 3 entleerte Greifvorrichtung 12 wird auf einem vierten Niveau 24 in waagerechter Richtung, in Fig. 1 nach links, in eine Position oberhalb der Aufnahmestelle 11 zurücktransportiert und anschließend in senkrechter Richtung zu der Aufnahmestelle 11 hin abgesenkt, um eine neue Gruppe 10 zu übernehmen.

Alternativ kann die entleerte Greifvorrichtung 12 auf dem vierten Niveau 24 in waagerechter Richtung über die Aufnahmestelle 11 hinaus bis in eine Servicestation 25 zurücktransportiert werden. In der Servicestation 25 können nach Bedarf Servicehandlungen, wie die Kühlung der Greifvorrichtung 12, die Reinigung der Greifvorrichtung 12 von anhaftendem Beschichtungsmedium oder der Abwurf von Ausschußbehältern 26, vorgenommen werden. In der Servicestation 25 kann auch die bis dahin eingesetzte Greifvorrichtung durch eine neue Greifvorrichtung 12 ersetzt werden. Zwei solche neue Greifvorrichtungen 12 sind in Fig. 1 links von der Servicestation 25 in Wartestellung eingezeichnet.

Die von der Greifvorrichtung 12 übernommenen, beschichteten Gasbehälter 3 fördert das Transportband 22 in der Transportrichtung 23 in eine Aushärtezone 27, die als tunnelartiger Aushärteofen ausgebildet ist. In der Aushärtezone 27 wird die Pulverschicht auf den Glasbehältern 3 z.B. während 10 min bei ca. 180 bis 220° C ausgehärtet. Danach können die Glasbehälter auf etwa 80° C abgekühlt und noch mit einer an sich bekannten Kaltendvergütung versehen werden.

Die Vorrichtung 1 gemäß Fig. 1 bietet auch die alternative Möglichkeit, die Glasbehälter 3 auf Wunsch oder bei Störungen in der Pulverbeschichtungsanlage nicht mit Pulverlack zu beschichten. In diesem Fall bleibt die Greifvorrichtung 12 an der Aufnahmestelle 11 inaktiv, so daß die Glasbehälter 3, wie in Fig. 1 rechts unten angedeutet, auf dem Kühlofenband 5 weiterlaufen und dort mit einer an sich bekannten Beschichtungsvorrichtung 28 mit einer üblichen Kaltendvergütung versehen werden.

Das vierte Niveau 24 kann gleich dem ersten Niveau 17 gemacht werden.

In allen Zeichnungsfiguren sind gleiche Teile mit gleichen Bezugszahlen versehen.

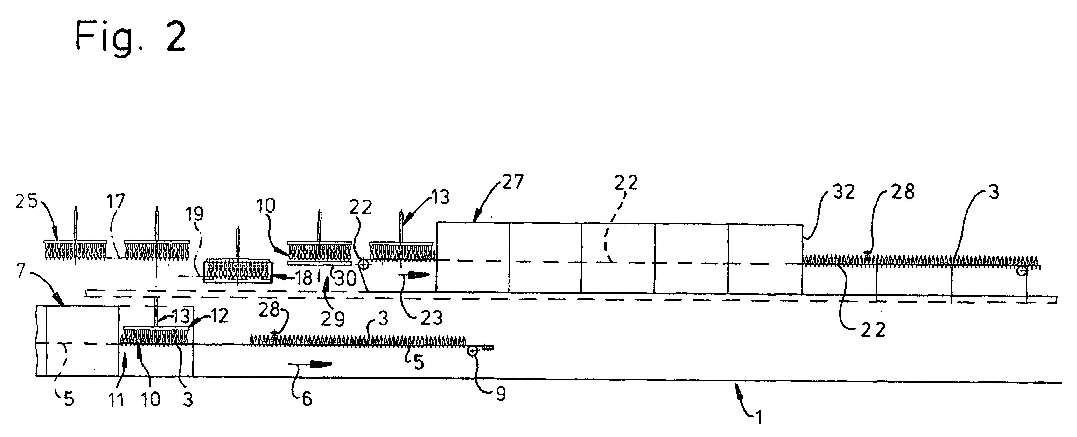

Bei dem Ausführungsbeispiel der Vorrichtung 1 nach Fig. 2 wird die Gruppe 10 der Glasbehälter 3 in der gleichen Weise an der Aufnahmestelle 11 von dem Kühlofenband 5 durch die Handhabungsvorrichtung 13 abgehoben, wie gemäß Fig. 1. Von dem ersten Niveau 17 wird die Gruppe 10 dann allerdings nicht nach links in Fig. 2, sondern nach rechts in waagerechter Richtung verfahren, bis sie oberhalb des Behälters 18 angelangt ist. Sodann wird die Gruppe 10 in der gleichen Weise in den Behälter 18 eingetaucht und aus diesem wieder ausgehoben, wie in Fig. 1. Nach dem Ausheben aus dem Beschichtungsmedium in dem Behälter 18 wird die Gruppe 10 in waagerechter Richtung nach rechts in Fig. 2 in eine Bodenaushärtezone 29 transportiert. In der ersten Bodenaushärtezone 29 ist unterhalb der Gruppe 10 ein Heizregister 30 stationär angeordnet. Mit dem Heizregister 30 wird im wesentlichen nur die Schicht 2 (Fig. 15) auf den Böden 31 (Fig. 16) der Glasbehälter 3 ausgehärtet. Dieses Aushärten dauert z.B. maximal 40 s und findet vorzugsweise auf dem ersten Niveau 17 (Fig. 1) statt.

Im Anschluß an die Bodenhärtung in der ersten Bodenaushärtezone 29 wird die Gruppe 10 durch die Handhabungsvorrichtung 13 in waagerechter Richtung nach rechts in Fig. 2 über das Transportband 22 transportiert. Die Gruppe 10 wird in der gleichen Weise auf dem Transportband 22 abgesetzt, wie dies zu Fig. 1 beschrieben wurde. Es folgt die Aushärtung des Rests der Schicht 2 (Fig. 15) in der Aushärtezone 27, die wiederum als tunnelartiger Aushärteofen ausgebildet ist. Nach einem hinteren Ende 32 der Aushärtezone 27 kühlen die beschichteten Glasbehälter 3 ab und werden schließlich durch die Beschichtungsvorrichtung 28 mit einer an sich bekannten Kaltendvergütung versehen.

Eine solche Kaltendvergütung kann analog zu Fig. 1 auch hinter der Aufnahmestelle 11 auf die Glasbehälter 3 aufgebracht werden, wenn diese ohne Pulverlackbeschichtung auf dem Kühlofenband 5 weiterlaufen.

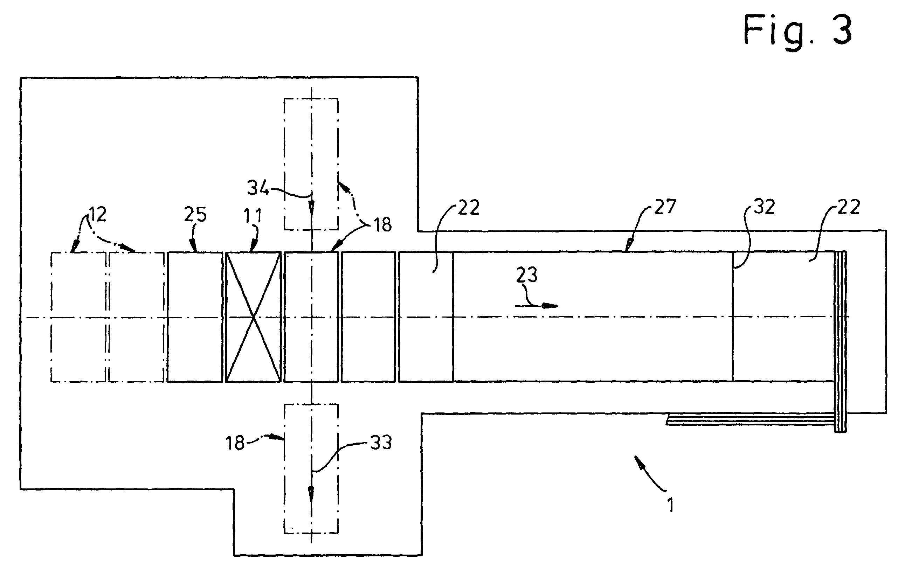

Fig. 3 zeigt eine Draufsicht auf die Vorrichtung 1 gemäß Fig. 2 in schematischer Darstellung. Wenn der Behälter 18 zu Reparatur- oder Wartungszwecken ausgetauscht werden soll, wird er in Richtung des Pfeils 33 seitlich aus seiner Betriebsposition herausbewegt. Ein frischer, betriebsbereiter Behälter 18 wird sodann in Richtung des Pfeils 34 von der gegenüberliegenden Seite her in die vollausgezogene Betriebsposition gebracht. So kann der Wechsel des Behälters 18 mit geringstmöglicher Verlustzeit vonstatten gehen.

Fig. 4 zeigt die Ansicht von unten auf die Greifvorrichtung 12. Man erkennt, wie in diesem Fall 600 Greifeinheiten 16 matrixartig in Spalten 4 und Reihen 14 an dem Träger 15 angeordnet sind. Bestandteile des Trägers 15 sind rohrförmige Traversen 35, von denen in Fig. 4 nur eine gezeichnet ist. Je eine dieser Traversen 35 ist einer Spalte 4 von in diesem Fall 15 Greifeinheiten 16 zugeordnet und trägt diese Greifeinheiten 16. Der Träger 15 weist in dem Ausführungsbeispiel nach Fig. 4 in seiner Längsmitte eine Teilung 36 auf. Die Teilung 36 dient dazu, die beiden dadurch geschaffenen Hälften der Greifvorrichtung 12 in den Richtungen des Doppelpfeils 37 etwas auseinanderzufahren, bevor jede Hälfte der Greifvorrichtung 12 in in diesem Fall einen gesonderten Behälter (nicht dargestellt) mit Beschichtungsmedium abgesenkt wird. Diese beiden Behälter stoßen mit ihren Stirnwänden aneinander oder haben eine gemeinsame Stirnwand, so daß die beiden Hälften der Greifvorrichtung 12 nur so weit auseinanderbewegt werden müssen, daß die Trennwand zwischen den beiden Behältern durch die beiden Hälften passiert werden kann. Nach dem Ausheben der beiden Hälften der Greifvorrichtung 12 aus den Wirbelsinterbetten werden die Hälften der Greifvorrichtung 12 wieder zusammengefahren, so daß sie sich in der Teilung 36 berühren und für den Weitertransport verriegelt sind. Der Träger 15 kann in ähnlicher Weise auch mehr als eine solche Teilung 36 aufweisen. Entsprechend wächst dann die Anzahl der Behälter 18.

Fig. 5 zeigt Einzelheiten der Greifvorrichtung 12 und insbesondere einer der in gleicher Weise ausgebildeten Greifeinheiten 16.

Jede Greifeinheit 16 weist ein Basisteil 38 auf, an dem in diesem Fall vier Greifelemente 39 jeweils um eine Achse 40 heb- und senkbar gelagert sind. Jedes Greifelement 39 ist mit einem sich zur Längsachse 41 der Greifeinheit 16 hin erstreckenden Betätigungsarm 42 versehen. Jeder Betätigungsarm 42 weist an seinem freien Ende einen Kugelkopf 43 auf, der in eine sich radial nach außen öffnende Nut eines Betätigungsrings 44 eingreift. Der Betätigungsring 44 ist durch eine Mutter 45 an einer Kolbenstange 46 eines Kolbens 47 einer Kolben-Zylinder-Einheit 48 festgelegt. Der Kolben 47 gleitet in einem Zylinder 49, der in einem oberen Kolbenteil 50 des Basisteils 38 ausgebildet ist. Alternativ können die Greifelemente in nicht gezeichneter Weise auch linear zwischen ihrer Greif- und Freigabeposition bewegbar sein.

Jedes Greifelement 39 ist segmentartig ausgebildet und wirkt in einer in Fig. 5 gezeigten Greifposition mit den übrigen Greifelementen 39 längs Fugen 51 und dem zugehörigen Glasbehälter 3 abdichtend zusammen. Am unteren Ende trägt jedes Greifelement 39 einen eingeschraubten Greifeinsatz 52, der sich in der Greifposition gemäß Fig. 5 formschlüssig und abdichtend unter und an ein Sicherungsband 53 der Mündung 20 legt. Oberhalb des umlaufenden Sicherungsbands 53 weist jede Mündung 20 in der üblichen Weise ein Außengewinde 54 zur Befestigung einer nicht gezeichneten Verschlußkappe auf. Die Greifeinsätze 52 liegen in den Ebenen der Fugen 51 außerdem in Umfangsrichtung abdichtend aneinander an, wenn sich die Greifelemente 39 in der in Fig. 5 gezeichneten Greifposition befinden.

Die Anordnung von drei und mehr Greifelementen 39 je Greifeinheit 16 hat einen besonderen Vorteil. Wenn nämlich die Mündung 20 des zugehörigen Glasbehälters 3 nicht konzentrisch mit der Längsachse 41 der Greifeinheit 16 angeordnet ist, bevor die Mündung 20 durch die Greifelemente ergriffen wird, kann innerhalb vorgegebener Toleranzen eine Zentrierung der Mündung 20 auf die Längsachse 41 durch die Greifelemente 39 erfolgen. Der besondere Vorteil ist, daß dies bei drei und mehr Greifelementen 39 für Exzentrizitäten der Mündung 20 in jeder beliebigen radialen Richtung gilt. Solche Exzentrizitäten können mehrere Gründe haben. Zum einen kann der an sich gerade Glasbehälter 3 schon mit seinem Boden 31 (Fig. 16) exzentrisch positioniert sein. Zum anderen kann aber auch ein mit dem Boden exakt positionierter Glasbehälter 3 schief sein, so daß seine Mündung 20 von der idealen konzentrischen Position abweicht. Zur Berücksichtigung solcher Umstände weist die Matrix gemäß Fig. 4 in beiden Koordinaten ein ausreichend großes Rastermaß 55 von z.B. 128 mm auf.

In Fig. 5 ist die Kolbenstange 46 in einer Bohrung 56 des Basisteils 38 durch eine Führungsbuchse 57 in radialer Richtung geführt. Zwischen dem Basisteil 38 und dem Kolben 47 ist eine die Greifelemente 39 in ihre Greifposition vorspannende Feder 58 angeordnet.

Der obere Kolbenteil 50 ist unter Bildung einer Zylinderkammer 59 in einem Hauptzylinder 60 verschiebbar und durch Dichtungen 61 abgedichtet geführt. Zwischen dem oberen Kolbenteil 50 und dem Hauptzylinder 60 ist eine den oberen Kolbenteil 50 in eine in Fig. 5 gezeichnete Tiefststellung vorspannende Feder 62 angeordnet. Diese Tiefststellung ist definiert durch einen Zapfen 63 des Basisteils 38, der in einem unteren Ende 64 eines Längsschlitzes 65 anliegt. Der Längsschlitz 65 ist Bestandteil einer eine schnelle Montage und Demontage der Greifeinheit 16 gestattenden Bajonettkulisse 66 (siehe auch Fig. 15) für den Zapfen 63. Die Bajonettkulisse 66 ist in einer Seitenwand 67 einer Tasse 68 ausgebildet, die an einen unteren Fortsatz 69 der Traverse 35 angeschraubt ist.

Die Kolbenstange 46 weist eine konzentrische Durchbrechung 70 auf, durch die hindurch sich eine weitere Kolbenstange 71 erstreckt. Ein freies, oberes Ende 72 der weiteren Kolbenstange 71 ist durch eine Mutter 73 an dem oberen Kolbenteil 50 des Basisteils 38 festlegbar. Ein unteres Ende 74 der weiteren Kolbenstange 71 trägt auf der Höhe der Greifelemente 39 einen weiteren Kolben 75. Auf dem weiteren Kolben 75 und der weiteren Kolbenstange 71 ist ein weiterer Zylinder 76 verschiebbar geführt, der unten einen Stopfen 77 trägt. Der Stopfen 77 wirkt entweder mit der Mündung 20 des Glasbehälters 3 in der aus Fig. 5 ersichtlichen Weise zusammen, oder der Stopfen 77 sitzt abdichtend in der mittleren Öffnung 78 der Greifeinsätze 52, wenn die Greifelemente 39 sich in ihrer in Fig. 5 gezeichneten Greifstellung befinden, jedoch kein Glasbehälter 3 gegriffen wurde. Es kann vorkommen, daß in der Matrix einer Gruppe 10 der Glasbehälter 3 hier und da Glasbehälter 3 fehlen. In diesem Fall sorgt der Stopfen 77 dafür, daß Beschichtungsmedium nicht in einen Innenraum 79 der zugehörigen Greifelemente 39 gelangt.

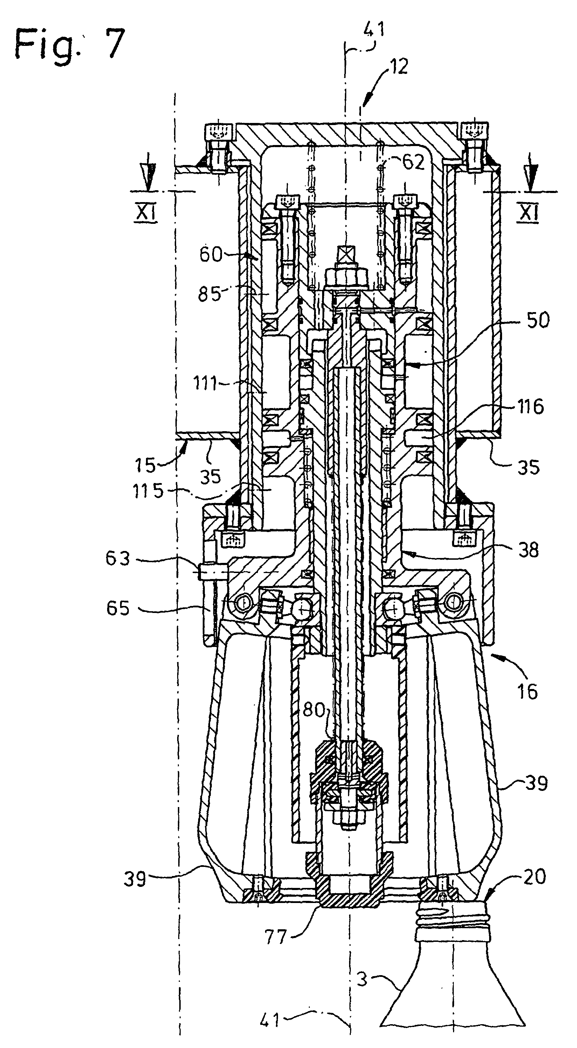

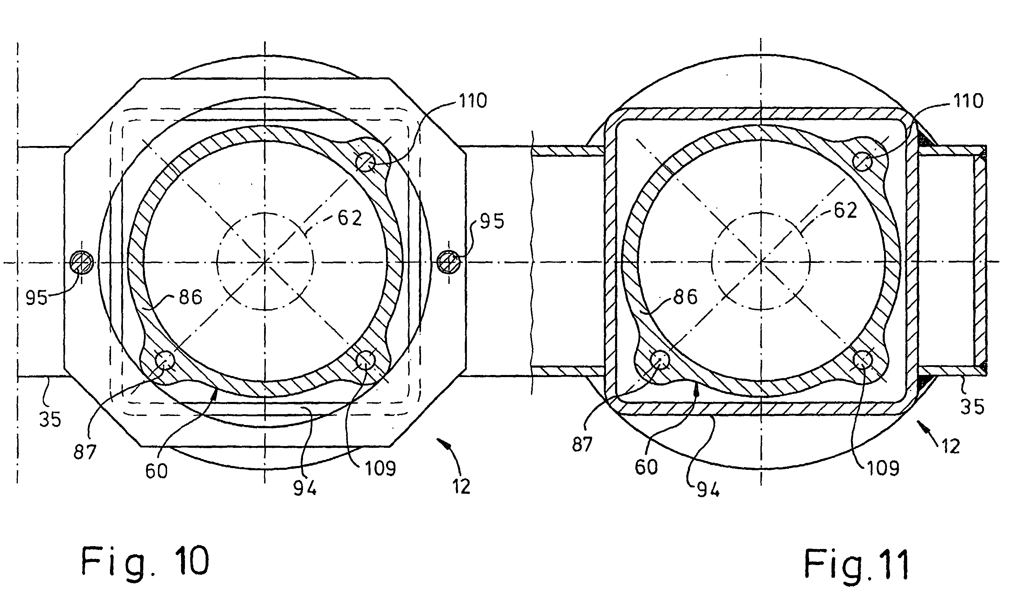

Zwischen dem weiteren Zylinder 76 und der weiteren Kolbenstange 71 ist eine den Stopfen 77 in eine in Fig. 7 gezeichnete Tiefststellung vorspannende Feder 80 angeordnet. Die weitere Kolbenstange 71 weist einen Hohlraum 81 auf, durch den zum Heben des weiteren Zylinders 76 Druckluft auf eine obere Seite 82 des weiteren Kolbens 75 geleitet werden kann. Diese Druckluft kommt über einen Verbindungskanal 83 aus einem Ringraum 84 des oberen Kolbenteils 50. Der Ringraum 84 steht über eine in Fig. 5 nur schematisch angedeutete Öffnung 85 in einer Seitenwand 86 des Hauptzylinders 60 in ständiger Verbindung mit einem achsparallelen Anschlußkanal 87 (Fig. 10 und 11) in der Seitenwand 86. Bei Entlüftung des Hohlraums 81 wird der Stopfen 77 durch die Kraft der Feder 80 in seine Tiefststellung zurückgeführt.

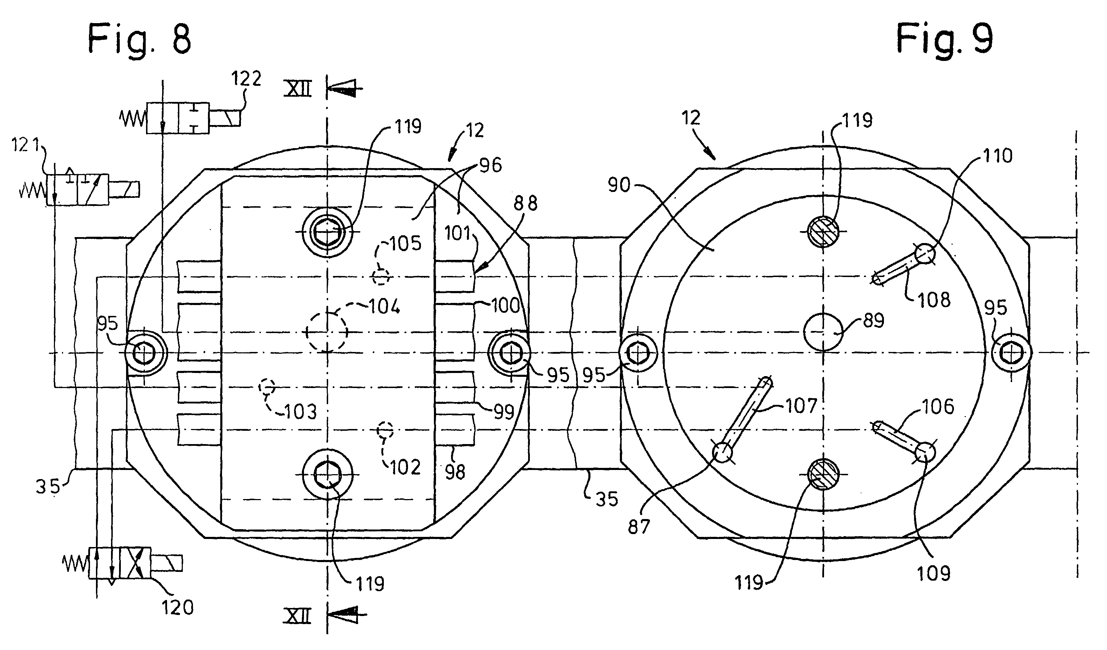

In die Zylinderkammer 59 ist ein unter erhöhtem Druck stehendes Spülgas, insbesondere Spülluft, einleitbar. Das Spülgas gelangt aus einer Versorgungsvorrichtung 88 durch eine Bohrung 89 (Fig. 9) in einer oberen Stirnwand 90 des Hauptzylinders 60 in die Zylinderkammer 59. Aus der Zylinderkammer 59 gelangt das Spülgas durch z.B. sechs über den Umfang verteilte Kanäle 91 in dem oberen Kolbenteil 50 in die Durchbrechung 70 der Kolbenstange 46 und von dort in den Innenraum 79 der Greifelemente 39. Bei Bedarf ist in dem Innenraum 79 außerhalb des weiteren Zylinders 76 eine Leithülse 92 angeordnet, welche die Spülluft nach unten hin auf die Mündung 20 und den Dichtungsbereich zwischen der Mündung 20 und den Greifeinsätzen 52 leitet. Die Leithülse 92 ist mit Madenschrauben 93 an der Mutter 45 festgelegt. Durch die Spülluft entsteht in dem Innenraum 79 ein gewisser Überdruck gegenüber der Umgebung. Dadurch wird das Eindringen von Beschichtungspulver in den Innenraum 79 erschwert oder unterbunden.

Der Hauptzylinder 60 ist in ein im wesentlichen quadratisches Aufnahmerohr 94 der Traverse 35 eingesetzt. Die Stirnwand 90 ist radial außen durch Schrauben 95 an der Traverse 35 festgelegt.

Die Versorgungsvorrichtung 88 weist für jede Greifeinheit 16 eine Brücke 96 auf. Durch jede Brücke 96 hindurch erstrecken sich in waagerechter Richtung vier zueinander parallele Bohrungen 97, in die jeweils eine rohrförmige Leitung 98 bis 101 (Fig. 8 und 12) dicht eingelötet ist. Jede der Leitungen 98 bis 101 ist von der Unterseite der Brücke 96 her mit einer Verbindungsbohrung 102 bis 105 (siehe auch Fig. 8 und 12) angebohrt. Die Verbindungsbohrung 104 fluchtet mit der Bohrung 89 (Fig. 9). Die Verbindungsbohrungen 102, 103 und 105 (siehe auch Fig. 8) fluchten jeweils mit einem in der Stirnwand 90 ausgebildeten Stichkanal 106 bis 108 (siehe auch Fig. 9). Der Stichkanal 106 mündet in einen achsparallelen Anschlußkanal 109 (Fig. 9 bis 11), der Stichkanal 107 mündet in den Anschlußkanal 87, und der Stichkanal 108 mündet in einen achsparallelen Anschlußkanal 110 (Fig. 9 bis 11).

Der Anschlußkanal 109 ist über eine in Fig. 5 nur schematisch angedeutete Öffnung 111 in der Seitenwand 86 ständig mit einem Ringraum 112 in dem oberen Kolbenteil 50 verbunden. Der Ringraum 112 steht über einen Verbindungskanal 113 in ständiger Verbindung mit einem Zylinderraum 114 oberhalb des Kolbens 47.

Der Anschlußkanal 110 steht über eine in Fig. 5 nur schematisch angedeutete Öffnung 115 in der Seitenwand 86 nur dann in Verbindung mit einem Ringraum 116 in dem oberen Kolbenteil 50, wenn sich das Basisteil 38 in seiner in Fig. 5 gezeichneten Tiefststellung befindet. Der Ringraum 116 steht über einen Verbindungskanal 117 in ständiger Verbindung mit einem Zylinderraum 118 auf der Unterseite des Kolbens 47. Durch die axial verhältnismäßig kurze Ausbildung des Ringraums 116 ist sichergestellt, daß dann, wenn das Basisteil 38 sich nicht in seiner Tiefststellung befindet, keine Druckkraft aufgrund von Druckmedium auf die Unterseite des Kolbens 47 ausgeübt wird.

Zwischen jede Brücke 96 und die zugehörige Stirnwand 90 ist eine zur Vereinfachung in den Zeichnungen nicht dargestellte Flachdichtung gelegt, die durch Schrauben 119 (Fig. 8, 9 und 12) in Position gehalten wird. Die Schrauben 119 durchdringen die Brücke 96 und sind in Gewindebohrungen der Stirnwand 90 eingedreht (Fig. 12).

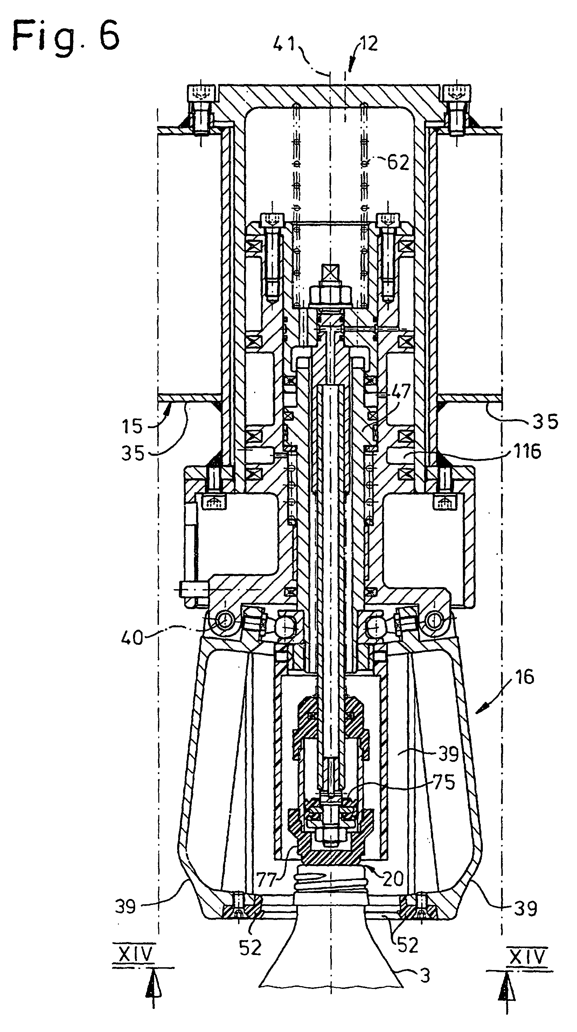

Fig. 6 zeigt eine Greifeinheit 16 mit den Greifelementen 39 in ihrer Freigabeposition. Diese Freigabeposition nehmen die Greifelemente ein, bevor die Glasbehälter 3 vom Kühlofenband 5 abgenommen werden, und später, wenn die Glasbehälter 3 auf dem Transportband 22 abgesetzt werden. Der Stopfen 77 sitzt in Fig. 6 auf der Mündung 20 und dichtet das Innere des Glasbehälters 3 gegen das Eindringen von Fremdkörpern, z.B. des Beschichtungspulvers, ab. Dabei ist der Stopfen 77 relativ zu dem weiteren Kolben 75 nach oben verschoben worden. Sollen die Greifelemente 39 aus der in Fig. 6 gezeigten Freigabestellung den Glasbehälter 3 greifen, wird Druckluft in den Ringraum 116 eingeleitet, wodurch der Kolben 47 nach oben gefahren wird und damit die Greifelemente 39 um die Achsen 40 absenkt, bis die Greifeinsätze 52 dichtenden und formschlüssigen Kontakt mit dem Glasbehälter 3 gemacht haben.

In Fig. 7 ist ein wiederum anderer Betriebszustand der Greifeinheit 16 dargestellt. Hier befindet sich der Stopfen 77 in seiner durch die Feder 80 verursachten Tiefststellung, ohne daß er in Berührung mit der Mündung des Glasbehälters 3 getreten wäre. Der Glasbehälter 3 steht in diesem Fall jedoch nicht koaxial zu der Längsachse 41. Dies hat dazu geführt, daß beim Absenken der Greifvorrichtung 12 das in der Freigabestellung befindliche rechte Greifelement 39 bestimmungswidrig auf der Mündung 20 aufgesetzt hat. Beim weiteren Absenken der Greifvorrichtung 12 hat sich sodann das Basisteil 38 mit seinem oberen Kolbenteil 50 weiter in den Hauptzylinder 60 gegen die Kraft der Feder 62 eingeschoben. Die Verbindung von der Öffnung 115 in den Ringraum 116 wurde dabei unterbrochen, so daß das Druckmedium nicht in der Lage ist, die Greifelemente 39 in ihre Greifposition zu schließen, wenn die Greifelemente 39 der übrigen Greifeinheiten 16 zum Ergreifen ihrer Glasbehälter 3 geschlossen werden.

Fig. 8 zeigt jeweils ein Stück der Leitungen 98 bis 101, die sich über die gesamte Länge der zugehörigen Traverse 35 erstrecken. Die Leitungen 98 und 101 sind in der in Fig. 8 angedeuteten Weise an ein Wegeventil 120 angeschlossen. Die Leitung 99 ist mit einem Wegeventil 121 verbunden und die Leitung 100 mit einem Wegeventil 122.

Die Fig. 9 bis 12 zeigen Einzelheiten der Greifvorrichtung 12, auf die zum Teil zuvor schon Bezug genommen wurde.

Fig. 13 zeigt eine andere Ansicht der in ihrer Greifposition befindlichen Greifelemente 39.

Fig. 14 stellt die Verhältnisse dar, wenn die Greifelemente 39 sich in ihrer Freigabeposition befinden. Dann besteht zwischen benachbarten Greifelementen 39 jeweils ein Abstand 123, der kleiner als der Durchmesser der Mündung 20 (Fig. 5) ist. So kann also die Mündung 20 beim Schließen der Greifelemente 39 in ihre Greifposition nicht durch die Zwischenräume zwischen den Greifelementen 39 ausweichen, sondern wird, wenn die Mündung 20 von vornherein exzentrisch zu der Längsachse 41 angeordnet ist, während des Schließens der Greifelemente 39 auf die Längsachse 41 zentriert.

Fig. 15 zeigt weitere Einzelheiten der Bajonettkulisse 66. Innerhalb des Längsschlitzes 65 ist strichpunktiert die oberste Betriebsstellung des Zapfens 63 eingetragen, die dieser in dem besonderen Betriebsfall gemäß Fig. 7 einnimmt. Dadurch ist ein Betriebshub 124 für den Zapfen 63 definiert, der voll in dem Längsschlitz 65 liegt, jedoch nicht in die Bajonettkulisse 66 gerät. Unbeabsichtigtes Lösen des Basisteils 38 von dem Hauptzylinder 60 ist daher ausgeschlossen.

Aus Fig. 15 ist auch ersichtlich, daß die in ihre Greifposition geschlossenen Greifelemente 39 allseitig einen radialen Überstand 125 von z.B. 5 mm gegenüber dem Glasbehälter 3 aufweisen.

Die Schicht 2 auf dem Glasbehälter 3 ist in Fig. 15 übertrieben dick dargestellt. Die Schicht 2 ist zumindest annähernd duroplastisch und aus einem Pulver entstanden, das einen Bestandteil aus härtbaren Harzen und einen Härterbestandteil aufweist. Mit einer solchen Schicht ist optimaler Schutz der jungfräulichen oder schon mit einer Heißendvergütung versehenen Glasoberfläche gewährleistet. Dieser Schutz besteht vor allem gegenüber mechanischen Beschädigungen. Unter diesem Schutz ist es möglich, die Wanddicke des Glasbehälters zu verringern, ohne dabei Einbußen an den Festigkeitswerten des fertigen Verpackungsbehälters hinnehmen zu müssen.

Fig. 16 zeigt Einzelheiten des Behälters 18, der, ausgehend von seinem Boden 126, in dieser Reihenfolge eine Luftkammer 127, eine poröse Platte 128 und eine in dem Pulver 129 bewegbare Auflockerungseinrichtung 130 aufweist. Der Luftraum 127 ist zur gleichmäßigen Durchströmung des Pulvers 129 mit Druckluft in Zellen 131, 132 unterteilt. Das Pulver bildet mit der aus dem Luftraum 127 zugeführten Druckluft ein Wirlbelsinterbett, dessen minimale Spiegelhöhe 133 und maximale Spiegelhöhe 134 in Fig. 16 mit strichpunktierten Linien eingetragen sind. Ideal wird die Spiegelhöhe zumindest annähernd konstant gehalten und durch Steuerung des Antriebes der Handhabungsvorrichtung 13 dafür gesorgt, daß die Greifeinheiten 16, unabhängig von der Anzahl der durch die Greifvorrichtung 12 in jedem Betriebszyklus gegriffenen Glasbehälter 3, zumindest annähernd gleich tief und möglichst wenig in das Pulver 129 eintauchen.

Oberhalb der Auflockerungseinrichtung 130 ist ein aus dem Pulver 129 aushebbarer Scherbenkorb 135 angeordnet. Entlang eines oberen Randes 136 jedes Behälters 18 ist ein zum Wirbelsinterbett hin offener Absaugkanal 137 angeordnet.

Fig. 17 zeigt Einzelheiten zweier Ausführungsformen des Heizregisters 30 gemäß Fig. 2. In dem gleichen Rastermaß 55 wie bei der Greifvorrichtung 12 gemäß Fig. 4 sind in Fig. 17 unterhalb des Bodens 31 (Fig. 16) jedes Glasbehälters 3 Heizvorrichtungen 138 oder 139 angeordnet. Bei den Heizvorrichtungen 138 handelt es sich um durch elektrische Widerstandsheizung beheizbare kreisförmige Heizteller. Die Heizvorrichtungen 139 stellen ringförmige Gasbrenner dar.

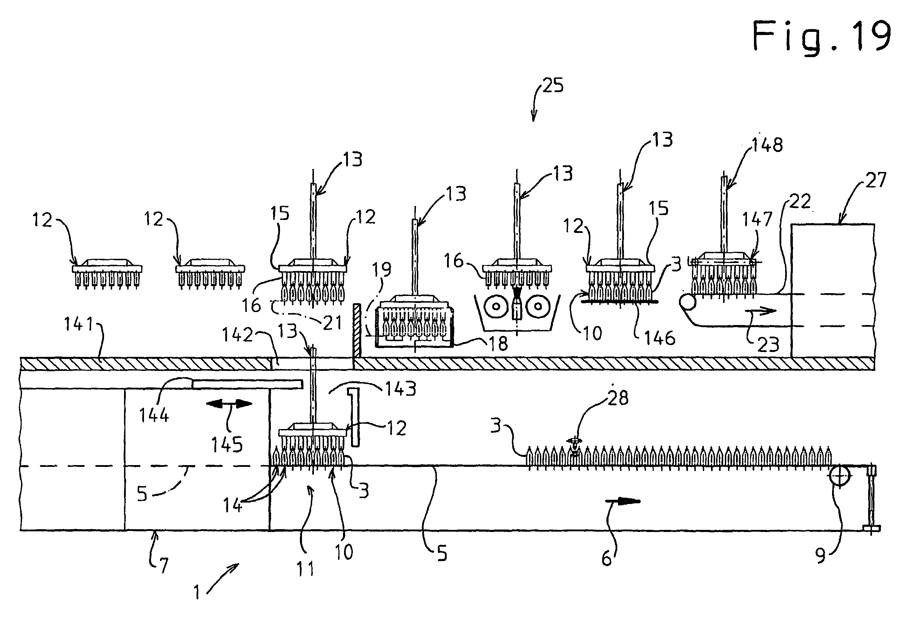

Fig. 18 zeigt ein Detail einer möglichen Ausführungsform des Transportbands 22. Das Transportband 22 besteht in diesem Fall aus Maschendraht, der vergleichsweise kleine und zahlreiche, mit den beschichteten Böden 31 der Glasbehälter 3 in Berührung tretende Tragbereiche 140 aufweist.

Bei dem Ausführungsbeispiel der Vorrichtung 1 gemäß Fig. 19 ist an der Aufnahmestelle 11 eine Zwischenbühne 141 mit einer Durchbrechung 142 versehen, durch die hindurch die Handhabungsvorrichtung 13 mit ihrer Greifvorrichtung 12 zur Aufnahme der Gruppe 10 der Glasbehälter 3 abgesenkt und mit der Gruppe 10 wieder angehoben werden kann. Der Kühlofen 7 weist in senkrechter Fluchtung mit der Durchbrechung 142 einen Deckenauslaß 143 auf. Der Deckenauslaß 143 kann zur Einsparung von Heizenergie und zur Aufrechterhaltung möglichst konstanter Temperaturverhältnisse an der Aufnahmestelle 11 durch eine Abdeckplatte 144 so weit und so lange wie möglich verschlossen werden. Die Abdeckplatte 144 ist dazu in den Richtungen eines Doppelpfeils 145 verschiebbar.

Aus der Aufnahmestelle 11 wird die Handhabungsvorrichtung 13 mit der Gruppe 10 senkrecht bis auf das dritte Nievau 21 angehoben und sodann in waagerechter Richtung nach rechts bis über den das Beschichtungsmedium enthaltenden Behälter 18 gefahren. Sodann wird die Einheit 13, 12 abwärts gefahren, bis die Gruppe 10 bis zu dem zweiten Niveau 19 in dem Behälter 18 eintaucht. Nach genügender Anlagerung des Beschichtungsmediums an die Glasbehälter 3 wird die Einheit 13, 12 wieder senkrecht angehoben und dann in waagerechter Richtung bis über eine Absetzplatte 146 gefahren. Dieses waagerechte Verfahren kann auf dem dritten Niveau 21 oder auf einem anderen Niveau geschehen. Zum Beispiel steht hierfür ein höheres Niveau dann zur Verfügung, wenn zwischen dem Behälter 18 und der Absetzplatte 146, wie in Fig. 19 dargestellt, die verhältnismäßig hoch angeordnete Servicestation 25 vorgesehen ist.

Über der Absetzplatte 146 angelangt, wird die Einheit 13, 12 mit der Gruppe 10 senkrecht nach unten abgesenkt. Sodann werden die Greifeinheiten 16 der Greifvorrichtung 12 passiviert, so daß sie die Glasbhälter 3 der Gruppe 10 freigeben und auf der Absetzplatte 146 abstellen.

Die so entleerte Einheit 13, 12 wird senkrecht nach oben und dann in Fig. 19 nach links über die Servicestation 25 bewegt. Dort wird die Greifvorrichtung 12 gereinigt, bevor die Einheit 13, 12, vorzugsweise auf dem dritten Niveau 21, weiter nach links über die Aufnahmestelle 11 bewegt wird, wo der Zyklus von neuem beginnt.

Die zuvor auf der Absetzplatte 146 abgestellte Gruppe 10 wird jetzt durch eine andere Greifvorrichtung 147 ergriffen. Die andere Greifvorrichtung 147 wird durch eine andere Handhabungsvorrichtung 148 getragen und kann grundsätzlich einfacher als die Greifvorrichtung 12 ausgebildet sein. Dies wird dadurch möglich, daß an der anderen Greifvorrichtung 147 im wesentlichen keine Reste des Beschichtungsmediums haften können. Vorzugsweise wird die andere Greifvorrichtung 147 in waagerechter Richtung über die Absetzplatte 146 bewegt, dann in senkrechter Richtung zu der Gruppe 10 hin abgesenkt, mit der Gruppe 10 wieder senkrecht nach oben gefahren und sodann, wie in Fig. 19 eingezeichnet, nach rechts in waagerechter Richtung über das Transportband 22 bewegt. Dort wird die andere Greifvorrichtung 147 passiviert, so daß die Gruppe 10 auf das Transportband 22 abgegeben wird. Die andere Greifvorrichtung 147 wird sodann vorzugsweise senkrecht nach oben und waagerecht nach links bis zurück über die Absetzplatte 146 bewegt, sobald dort durch die Einheit 13, 12 wieder eine neue Gruppe 10 abgesetzt und die Einheit 13, 12 wieder entfernt worden ist. Zwischen der Absetzplatte 146 und dem Transportband 22 kann die Einheit 148, 147 mit der daran hängenden Gruppe 10 auch noch eine Bodenaushärtezone entsprechend der Bodenaushärtezone 29 in Fig. 2 anfahren.

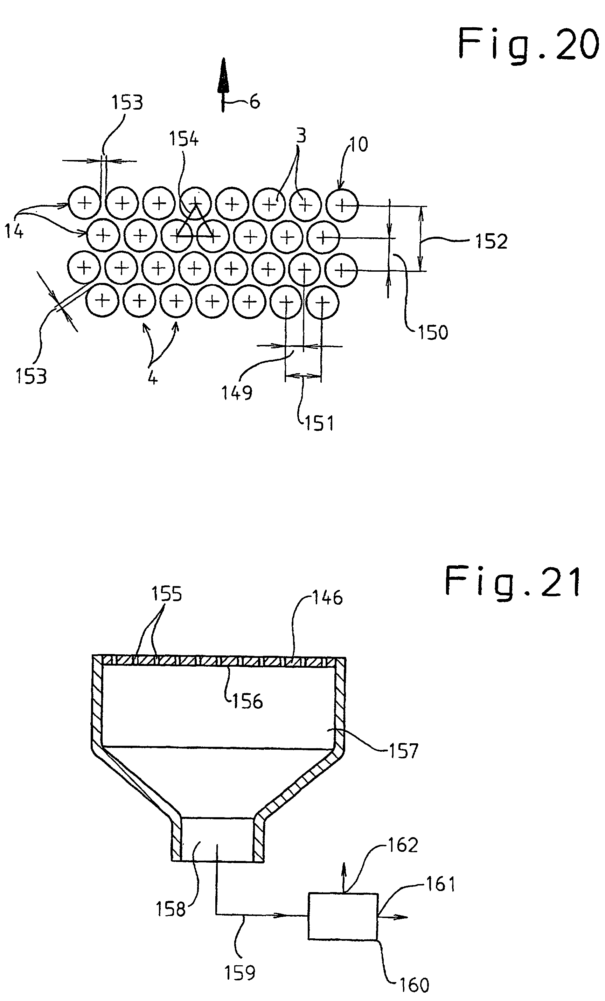

Fig. 20 zeigt ein besonderes Stellschema der Glasbehälter 3 der Gruppe 10. In diesem Stellschema werden die Glasbehälter 3 auf dem Kühlofenband 5 angeliefert. Benachbarte Reihen 14 und Spalten 4 sind in diesem Stellschema jeweils um eine halbe Teilung 145;150 gegeneinander versetzt. Die Teilungen selbst sind in Fig. 20 mit 151 und 152 bezeichnet. Jeder Glasbehälter 3 der Gruppe 10 weist einen gleichgroßen Abstand 153 von allen benachbarten Glasbehältern 3 der Gruppe 10 auf. Dies wird bei Glasbehältern 3 mit kreisrundem Querschnitt dadurch erreicht, daß die Längsachsen jeweils drei benachbarter Glasbehälter 3 an den Ecken eines gleichseitigen Dreiecks 154 angeordnet sind.

Gemäß Fig. 21 ist die Absetzplatte 146 mit Durchbrechungen 155 versehen. Eine Unterseite 156 der Absetzplatte 146 ist mit einer mit Unterdruck beaufschlagbaren Kammer 157 verbunden. Wenn sich beim Abstellen einer Gruppe 10 der Glasbehälter 3 auf der Absetzplatte 146 Teile des Beschichtungsmediums lösen sollten, werden diese durch die Durchbrechungen 155 abgesaugt und gelangen durch einen Auslaß 158 der Kammer 157 über eine Leitung 159 in eine Abscheidevorrichtung 160. Aus einem Auslaß 161 der Abscheidevorrichtung 160 wird dann das abgeschiedene Beschichtungsmedium ausgetragen Und möglichst wiederverwertet. Aus einem weiteren Auslaß 162 der Abscheidevorrichtung 160 entweicht gereinigte Trägerluft.

## Patentansprüche

1. Vorrichtung (1) zur Aufbringung einer Schicht (2) auf zumindest einen Teil der Außenfläche von Glasbehältern (3),
mit einer Temperiervorrichtung (7), welche die Glasbehälter (3) auf eine für die Beschichtung geeignete Temperatur oberhalb der Raumtemperatur temperiert,
mit einer eine Greifvorrichtung (12) aufweisenden Handhabungsvorrichtung (13), wobei mit der Greifvorrichtung (12) jeweils eine Gruppe (10) der temperierten Glasbehälter (3) an einer Aufnahmesteile (11) greifbar und transportierbar ist,
wobei die Greifvorrichtung (12) einen entlang einer Bahn der Handhabungsvorrichtung (13) bewegbaren Träger (15) aufweist,
wobei an dem Träger (15) für jeden Glasbehälter (3) der Gruppe (10) eine Greifeinheit (16) angeordnet ist,
wobei jede Greifeinheit (16) ein Basisteil (38) und an dem Basisteil (38) gelagerte Greifelemente (39) aufweist, die zwischen einer den Glasbehälter (3) greifenden Greifposition und einer den Glasbehälter (3) freigebenden Freigabeposition steuerbar sind,
wobei die Vorrichtung (1) ferner einen ein Beschichtungsmedium (129) enthaltenden Behälter (18) aufweist, in welches 8eschichtungsmedium (129) jede Gruppe (10) der Glasbehälter (3) durch die Handhabungsvorrichtung (13) ganz oder teilweise eintauchbar ist, bis Beschichtungsmedium (129) in der gewünschten Weise an den Glasbehältern (3) haftet,
wobei jede Gruppe (10) der beschichteten Glasbehälter (3) durch die Handhabungsvorrichtung (13) aus dem Beschichtungsmedium (129) aushebbar und weitertransportierbar ist,
wobei jede Gruppe (10) der Glasbehälter (3) durch Steuerung der Greifelemente (39) in ihre Freigabeposition auf ein Transportband (22) der Vorrichtung (1) abgebbar ist,
wobei die von den Glasbehältern (3) entleerte Greifvorrichtung (12) durch die Handhabungsvorrichtung (13) wieder zu der Aufnahmestelle (11) zurücktransportierbar ist,
wobei die Vorrichtung (1) eine Aushärtezone (27) aufweist, durch die hindurch jede Gruppe (10) der beschichteten Glasbehälter (3) durch das Transportband (22) zur Aushärtung zumindest eines Teils der Schicht (2) der Glasbehälter (3) transportierbar ist,
und wobei gegebenenfalls zwischen dem das Beschichtungsmedium (129) enthaltenden Behälter (18) und dem Transportband (22) eine Bodenaushärtezone (29) vorgesehen ist, die zur Aushärtung im wesentlichen nur der Schicht (2) auf Böden (31) der Glasbehälter (3) ausgebildet ist, während in diesem letzteren Fall die Aushärtezone (27) zur Aushärtung des Rests der Schicht (2) der Glasbehälter (3) ausgebildet ist,
**dadurch gekennzeichnet, daß** wenigstens drei Greifelemente (39) zwischen der Greif- und der Freigabeposition bewegbar an dem Basisteil (38) gelagert sind,
daß jedes Greifelement (39) einen sich zur Längsachse (41) der Greifeinheit (16) hin erstreckenden Betätigungsarm (42) aufweist, und daß alle Betätigungsarme (42) jeder Greifeinheit (16) durch eine Kolben-Zylinder-Einheit (48) der Greifeinheit (16) betätigbar sind.

2. Vorrichtung nach Anspruch 1,
**dadurch gekennzeichnet, daß** die aus dem Beschichtungsmedium (129) ausgehobene Gruppe (10) der beschichteten Glasbehälter (3) durch die Greifvorrichtung (12) auf einer Absetzplatte (146) absetzbar ist,
daß diese Gruppe (10) sodann durch eine andere Greifvorrichtung (147) einer anderen Handhabungsvorrichtung (148) ergreifbar, gegebenenfalls durch die Bodenaushärtezone (29) transportierbar und auf das Transportband (22) abgebbar ist,
daß die von den Glasbehältern (3) entleerte andere Greifvorrichtung (147) durch die andere Handhabungsvorrichtung (148) zum Ergreifen einer weiteren Gruppe (10) beschichteter Glasbehälter (3) von der Absetzplatte (146) zu der Absetzplatte (146) hin zurücktransportierbar ist,
und daß die andere Greifvorrichtung (147) Greifeinheiten (16) gemäß Anspruch 1 aufweist.

3. Vorrichtung nach Anspruch 1 oder 2,
**dadurch gekennzeichnet, daß** jedes Greifelement (39) segmentartig ausgebildet ist und in der Greifposition mit den übrigen Greifelementen (39) der Greifeinheit (16) und dem zugehörigen Glasbehälter (3) abdichtend zusammenwirkt.

4. Vorrichtung nach einem der Ansprüche 1 bis 3,
**dadurch gekennzeichnet, daß** ein Kolben (47) und eine Kolbenstange (46) der Kolben-Zylinder-Einheit (48) in einem Hauptzylinder (60) und einer Bohrung (56) des Basisteils (38) konzentrisch angeordnet und verschiebbar gelagert sind,
und daß die Betätigungsarme (42) mit der Kolbenstange (46) gekuppelt sind.

5. Vorrichtung nach einem der Ansprüche 1 bis 4,
**dadurch gekennzeichnet, daß** zwischen dem Basisteil (38) und einem Kolben (47) der Kolben-Zylinder-Einheit (48) eine die Greifelemente (39) in ihre Greifposition vorspannende Feder (58) angeordnet ist.

6. Vorrichtung nach einem der Ansprüche 1 bis 5,
**dadurch gekennzeichnet, daß** ein oberer Kolbenteil (50) jedes Basisteils (38) in einem an dem Träger (15) festlegbaren Hauptzylinder (60) der zugehörigen Greifeinheit (16) unter Bildung einer Zylinderkammer (59) verschiebbar und abgedichtet geführt ist.

7. Vorrichtung nach Anspruch 6,
**dadurch gekennzeichnet, daß** zwischen dem oberen Kolbenteil (50) und dem Hauptzylinder (60) eine den oberen Kolbenteil (50) in eine Tiefststellung vorspannende Feder (62) angeordnet ist.

8. Vorrichtung nach Anspruch 6 oder 7,
**dadurch gekennzeichnet, daß** das Basisteil (38) im Betrieb durch eine Zapfen- (63)/Längsschlitz- (65)Verbindung zwischen dem Basisteil (38) und dem Träger (15) vor Drehung gegenüber dem Hauptzylinder (60) gesichert ist.

9. Vorrichtung nach Anspruch 8,
**dadurch gekennzeichnet, daß** der Längsschlitz (65) Bestandteil einer eine schnelle Montage und Demontage der Greifeinheit (16) gestattenden Bajonettkulisse (66) für den Zapfen (63) ist.

10. Vorrichtung nach einem der Ansprüche 4 bis 9,
**dadurch gekennzeichnet, daß** die Kolbenstange (46) eine konzentrische Durchbrechung (70) aufweist,
daß sich durch die Durchbrechung (70) hindurch eine weitere Kolbenstange (71) erstreckt, deren freies, oberes Ende (72) an dem Basisteil (38) festlegbar (73) ist, und deren unteres Ende (74) auf der Höhe der Greifelemente (39) einen weiteren Kolben (75) trägt,
daß auf dem weiteren Kolben (75) und auf der weiteren Kolbenstange (71) ein weiterer Zylinder (76) verschiebbar geführt ist,
und daß der weitere Zylinder (76) unten einen Stopfen (77) trägt, der entweder mit einer Mündung (20) des Glasbehälters (3) oder mit den in ihrer Greifposition befindlichen Greifelementen (39) abdichtend zusammenwirkt.

11. Vorrichtung nach Anspruch 10,
**dadurch gekennzeichnet, daß** zwischen dem weiteren Zylinder (76) und der weiteren Kolbenstange (71) eine den Stopfen (77) in eine Tiefststellung vorspannende Feder (80) angeordnet ist.

12. Vorrichtung nach Anspruch 10 oder 11,
**dadurch gekennzeichnet, daß** die weitere Kolbenstange (71) einen Hohlraum (81) aufweist, durch den zum Heben des weiteren Zylinders (76) ein Druckmedium auf eine obere Seite (82) des weiteren Kolbens (75) leitbar ist.

13. Vorrichtung nach einem der Ansprüche 6 bis 12,
**dadurch gekennzeichnet, daß** in die Zylinderkammer (59) ein unter erhöhtem Druck stehendes Spülgas einleitbar ist, und daß das Spülgas durch Kanäle (91) in dem oberen Kolbenteil (50) in eine konzentrische Durchbrechung (70) der Kolbenstange (46) und von dort in einen Innenraum (79) der Greifelemente (39) leitbar ist.

14. Vorrichtung nach einem der Ansprüche 6 bis 13,
**dadurch gekennzeichnet, daß** die Versorgung einer Anzahl von Greifeinheiten (16) mit Druckmedium durch eine gemeinsame Versorgungsvorrichtung (88) erfolgt,
daß jede Versorgungsvorrichtung (88) mehrere, voneinander getrennte Leitungen (98 bis 101) aufweist,
daß eine (100) der Leitungen (98 bis 101) ständig mit der Zylinderkammer (59) verbunden ist,
und daß jede übrige (98,99,101) der Leitungen (98 bis 101) mit einer zugehörigen Öffnung (111,85,115) in einer Seitenwand (86) des Hauptzylinders (60) verbunden ist.

15. Vorrichtung nach Anspruch 14,
**dadurch gekennzeichnet, daß** jede Versorgungsvorrichtung (88) mit einer Stirnwand (90) der zugehörigen Anzahl von Greifeinheiten (16) dicht verbindbar ist,
und daß jede Leitung (98 bis 101) über eine Verbindungsbohrung (102 bis 105) der Versorgungsvorrichtung (88) ständig mit einem Anschlußkanal (106,109;107,87;89;108,110) des Hauptzylinders (60) verbunden ist,
wobei jeder Anschlußkanal in die zugehörige Öffnung (111;85;89;115) mündet.

16. Vorrichtung nach einem der Ansprüche 1 bis 15,
**dadurch gekennzeichnet, daß** die Greifelemente (39) in ihrer Greifposition in radialer Richtung allseitig um einen Überstand (125) über den zugehörigen gegriffenen Glasbehälter (3) hinausragen.

17. Vorrichtung nach einem der Ansprüche 1 bis 16,
**dadurch gekennzeichnet, daß** jede Gruppe (10) der Glasbehälter (3) gleichzeitig in wenigstens einen das Beschichtungsmedium (129) enthaltenden Behälter (18) eintauchbar ist,
und daß jeder Behälter (18) ein ein Pulver (129) als Beschichtungsmedium aufweisendes Wirbelsinterbett enthält.

18. Vorrichtung nach Anspruch 17,
**dadurch gekennzeichnet, daß** jeder Behälter (18) ausgehend von seinem Boden (126), in dieser Reihenfolge eine Luftkammer (127), eine poröse Platte (128) und eine in dem Pulver (129) bewegbare Auflockerungseinrichtung (130) aufweist.

19. Vorrichtung nach Anspruch 18,
**dadurch gekennzeichnet, daß** oberhalb der Auflockerungseinrichtung (130) ein aus dem Pulver (129) aushebbarer Scherbenkorb (135) angeordnet ist.

20. Vorrichtung nach einem der Ansprüche 17 bis 19,
**dadurch gekennzeichnet, daß** entlang eines oberen Randes (136) jedes Behälters (18) ein zum Wirbelsinterbett hin offener Absaugkanal (137) angeordnet ist.

21. Vorrichtung nach einem der Ansprüche 1 bis 16,
**dadurch gekennzeichnet, daß** jede Gruppe (10) der Glasbehälter (3) gleichzeitig in wenigstens einen eine Dispersion als Beschichtungsmedium enthaltenden Behälter (18) eintauchbar ist.

22. Vorrichtung nach einem der Ansprüche 1 bis 21,
**dadurch gekennzeichnet, daß** eine Sensoreinrichtung vorgesehen ist, mit der feststellbar ist, ob und gegebenenfalls wieviele Greifeinheiten (16) der Greifvorrichtung (12) keine Glasbehälter (3) gegriffen haben,
und daß ein Antrieb der Handhabungsvorrichtung (13) in Abhängigkeit von der Anzahl der nicht gegriffenen Glasbehälter (3) so steuerbar ist, daß die Greifeinheiten (16) stets bis zu einer zumindest annähernd gleichen Tiefe in das Beschichtungsmedium (129) eintauchen.

23. Vorrichtung nach einem der Ansprüche 1 bis 22,
**dadurch gekennzeichnet, daß** ein Antrieb der Handhabungsvorrichtung (13) so steuerbar ist, daß die Geschwindigkeiten, mit denen die Glasbehälter (3) in das Beschichtungsmedium (129) eingetaucht und aus dem Beschichtungsmedium (129) ausgehoben werden, moduliert sind.

24. Vorrichtung nach einem der Ansprüche 2 bis 23,
**dadurch gekennzeichnet, daß** die Absetzplatte (146) Durchbrechungen (155) aufweist,
und daß eine Unterseite (156) der Absetzplatte (146) mit einer mit Unterdruck beaufschlagbaren Kammer (157) verbunden ist.

25. Vorrichtung nach einem der Ansprüche 1 bis 24,
**dadurch gekennzeichnet, daß** die Bodenaushärtezone (29) ein Heizregister (30) aufweist,
und daß das Heizregister (30) gegenüber dem Boden (31) jedes Glasbehälters (3) eine Heizvorrichtung (138;139) aufweist.

26. Vorrichtung nach Anspruch 25,
**dadurch gekennzeichnet, daß** diejenigen Heizvorrichtungen (138;139), denen gegenüber gegebenenfalls kein Glasbehälter (3) angeordnet ist, inaktivierbar sind.

27. Vorrichtung nach einem der Ansprüche 1 bis 26, **dadurch gekennzeichnet, daß** das Transportband (22) vergleichsweise kleine und zahlreiche, mit den beschichteten Böden (31) der Glasbehälter (3) in Berührung tretende Tragbereiche (140) aufweist.

28. Vorrichtung nach Anspruch 27,
**dadurch gekennzeichnet, daß** zumindest die Tragbereiche (140) des Transportbands (22) mit einem Trennmittel zu versehen sind, bevor die Böden (31) auf den Tragbereichen (140) aufsetzen.

29. Vorrichtung nach einem der Ansprüche 1 bis 28,
**dadurch gekennzeichnet, daß** in jeder die Temperiervorrichtung (7) verlassenden Gruppe (10) der Glasbehälter (3) die Glasbehälter (3) in einer Transportrichtung (6) in Spalten (4) und quer zu der Transportrichtung (6) in Reihen (14) angeordnet sind,
wobei benachbarte Spalten (4) und Reihen (14) jeweils um eine halbe Teilung (150;149) gegeneinander versetzt sind.

30. Vorrichtung nach Anspruch 29,
**dadurch gekennzeichnet, daß** jeder Glasbehälter (3) jeder Gruppe (10) einen gleich großen Abstand (153) von allen benachbarten Glasbehältern (3) der Gruppe (10) aufweist.

## Claims

1. Apparatus (1) for the application of a coating (2) to at least a part of the exterior surface of glass containers (3),
comprising a tempering device (7) which tempers the glass containers (3) to a temperature above room temperature and suitable for the coating process,
and comprising a handling device (13) which includes a gripping device (12),
wherein by means of the gripping device (12) respective groups (10) of the tempered glass containers (3) can be gripped at a pick-up site (11) and conveyed,
wherein the gripping device (12) comprises a carrier (15) which is moveable along a path of the handling device (13),
wherein a gripping unit (16) is arranged on the carrier (15) for each glass container (3) of the group (10),
wherein each gripping unit (16) comprises a base portion (38) and gripping elements (39) mounted on the base portion (38) which are controllable between a gripping position gripping a glass container (3) and a release position releasing the glass container (3),
wherein the apparatus (1) further comprises a vessel (18) containing a coating medium (129), into which coating medium (129) each group (10) of the glass containers (3) is arranged to be wholly or partially dipped by means of the handling device (13), until coating medium (129) adheres in the desired manner to the glass containers (3),
wherein each group (10) of the coated glass containers (3) can be raised by the handling device (13) from the coating medium (129) and conveyed onwards,
wherein each group (10) of the glass containers (3) can be released onto a conveyor belt (22) of the apparatus (1) by controlling of the gripping elements (39) into their release position,
wherein the gripping device (12) emptied of the glass containers (3) is arranged to be conveyed back again to the pick-up site(11) by the handling device (13),
wherein the apparatus (1) includes a setting zone (27) through which each group (10) of the coated glass containers (3) is arranged to be conveyed by the conveyor belt (22) in order to harden at least a part of the coating (2) of the glass containers (3),
and wherein a base setting zone (29) is provided, possibly between the vessel (18) containing the coating medium (129) and the conveyor belt (22), which zone is provided for the hardening essentially only of the coating (2) on bases (31) of the glass containers (3), while in this latter case the setting zone (27) is intended for the hardening of the rest of the coating (2) of the glass containers (3),
**characterised in that** at least three gripping elements (39) are mounted on the base portion (38) moveable between the gripping position and the release position,
each gripping element (39) comprises an actuating arm (42) extending towards the longitudinal axis (41) of the gripping unit (16),
and all actuating arms (42) of each gripping unit (16) are actuatable by a piston-cylinder unit (48) of the gripping unit (16).

2. Apparatus according to claim 1,
**characterised in that** the group (10) of the coated glass containers (3) raised from the coating medium (129) is arranged to be deposited by the gripping device (12) on a set-down plate (146),
this group (10) then is grippable by a further gripping device (147) of a further handling device (148), possibly is transportable through the base setting zone (29), and is arranged to be deposited on the conveyor belt (22),
said further gripping device (147) emptied of the glass containers (3) is arranged to be conveyed back by said further handling device (148) in order to grip a further group (10) of coated glass containers (3) from the set-down plate (146),
and said further gripping device (147) comprises gripping units (16) according to claim 1.

3. Apparatus according to claim 1 or 2,
**characterised in that** each gripping element (39) is of segmental form and cooperates sealingly in the gripping position with the remaining gripping elements (39) of the gripping unit (16) and with the associated glass container (3).

4. Apparatus according to one of claims 1 to 3,
**characterised in that** a piston (47) and a piston rod (46) of the piston-cylinder unit (48) are arranged concentrically and are mounted displaceably within a main cylinder (60) and a bore (56) of the base portion (38),
and the actuating arms (42) are coupled to the piston rod (46).

5. Apparatus according to one of claims 1 to 4,
**characterised in that** between the base portion(38) and a piston (47) of the piston-cylinder unit (48) there is arranged a spring (58) biassing the gripping elements (39) into their gripping position.

6. Apparatus according to one of claims 1 to 5,
**characterised in that** an upper piston portion (50) of each base portion (38) is displaceably and sealingly guided in a main cylinder (60) of the associated gripping unit (16) securable to the carrier (15) thereby to form a cylinder chamber (59).

7. Apparatus according to claim 6,
**characterised in that** between the upper piston portion (50) and the main cylinder (60) there is arranged a spring (62) biassing the upper piston portion (50) into a lowermost position.

8. Apparatus according to claim 6 or 7,
**characterised in that** the base portion (38), in operation, is secured against rotation relative to the main cylinder (60) by a pin (63) /elongate slot (65) connection between the base portion (38) and the carrier (15).

9. Apparatus according to claim 8,
**characterised in that** the elongate slot (65) is a constituent of a bayonet link (66) for the pin (63) permitting a rapid assembly and dismantling of the gripping unit (16).

10. Apparatus according to one of claims 4 to 9,
**characterised in that** the piston rod (46) has a concentric aperture (70) therethrough,
through said aperture (70) extends a further piston rod (71) whose free, upper end (72) is securable (73) to the base portion (38), and whose lower end (74) carries a further piston (75) at the level of the gripping elements (39),
a further cylinder (76) is displaceably guided on said further piston (75) and on said further piston rod (71),
and said further cylinder (76) carries a stop (77) at the bottom which cooperates sealingly either with a mouth (20) of the glass container (3) or with the gripping elements (39) when located in their gripping position.

11. Apparatus according to claim 10,
**characterised in that** between the further cylinder (76) and the further piston rod (71) there is arranged a spring (80) biassing the plug (77) into a lowermost position.

12. Apparatus according to claim 10 or 11,
**characterised in that** the further piston rod (71) includes a hollow chamber (81) through which is conductible a pressurized medium to an upper side (82) of said further piston (75) in order to raise said further cylinder (76).

13. Apparatus according to one of claims 6 to 12,
**characterised in that** a flushing gas under increased pressure can be introduced into the cylinder chamber (59),
and the flushing gas can be conducted through channels (91) in the upper piston portion (50) into a concentric through aperture (70) of the piston rod (46) and from there into an internal chamber (79) of the gripping elements (39).

14. Apparatus according to one of claims 6 to 13,
**characterised in that** the supply of a plurality of gripping units (16) with pressurized medium is effected by a common supply device (88),
each supply device (88) comprises a plurality of pipes (98 to 101) separate from one another,
one (100) of the pipes (98 to 101) is connected permanently to the cylinder chamber (59),
and each remaining one (98, 99, 101) of the pipes (98 to 101) is connected to an associated aperture (111, 85, 115) in a side wall (86) of the main cylinder (60).

15. Apparatus according to claim 14,
**characterised in that** each supply device (88) is sealingly connectable with an end wall (90) of the associated plurality of gripping units (16),
and each pipe (98 to 101) is connected by means of a connecting bore (102 to 105) of the supply device (88) permanently to a terminal channel (106, 109; 107, 87; 89; 108, 110) of the main cylinder (6),
wherein each terminal channel issues into the associated aperture (111; 85; 89; 115).

16. Apparatus according to one of claims 1 to 15,
**characterised in that** the gripping elements (39) project in their gripping position in the radial direction on all sides with an overhang (125) beyond the associated gripped glass container (3).

17. Apparatus according to one of claims 1 to 16,
**characterised in that** each group (10) of the glass containers (3) is arranged to be dipped simultaneously into at least one vessel (18) containing the coating medium (129),
and each vessel (18) contains a fluidized sinter bed comprising a powder (129) as coating medium.

18. Apparatus according to claim 17,
**characterised in that** each vessel (18) starting from its base (126) comprises in sequence an air chamber (127), a porous plate (128) and a dispersing device (130) moveable in the powder (129).

19. Apparatus according to claim 18,
**characterised in that** above the dispersing device (130) there is arranged a cullet basket (135) which can be raised from the powder (129).

20. Apparatus according to one of claims 17 to 19,
**characterised in that** a suction channel (137) which is open towards the fluidized bed is arranged along an upper edge (136) of each vessel (18).

21. Apparatus according to one of claims 1 to 16,
**characterised in that** each group (10) of the glass containers (3) is arranged to be dipped simultaneously into at least one vessel (18) containing a dispersion as coating medium.

22. Apparatus according to one of claims 1 to 21,
**characterised in that** a sensor device is provided by means of which one can ascertain whether and possibly how many gripping units (16) of the gripping device (12) have gripped no glass container (3),
and a drive means of the handling device (13) is controllable in dependence upon the number of glass containers (3) which are not gripped so that the gripping units (16) always dip into the coating medium (129) to at least approximately the same depth.

23. Apparatus according to one of claims 1 to 22,
**characterised in that** a drive means of the handling device (13) is controllable so that the speeds with which the glass containers (3) are dipped into the coating medium (129) and are raised from the coating medium (129) are modulated.

24. Apparatus according to one of claims 2 to 23,
**characterised in that** the set-down plate (146) has apertures (155) therethrough,
and an underside (156) of the set-down plate (146) is connected to a chamber (157) in which a reduced pressure can be created.

25. Apparatus according to one of claims 1 to 24,
**characterised in that** the base setting zone (29) includes a heating register (30),
and the heating register (30) has a heating device (138; 139) facing the base (31) of each glass container (3).

26. Apparatus according to claim 25,
**characterised in that** those heating devices (138; 139) which are arranged opposite places where glass containers (3) are absent are arranged to be rendered inactive.

27. Apparatus according to one of claims 1 to 26,
**characterised in that** the conveyor belt (22) has comparatively small and numerous support zones (140) which come into contact with the coated bases (31) of the glass containers (3).

28. Apparatus according to claim 27,
**characterised in that** at least the support zones (140) of the conveyor belt (22) are to be provided with a separating means before the bases (31) are set down on the support zones (140).

29. Apparatus according to one of claims 1 to 28,
**characterised in that** in each group (10) of the glass containers (3) leaving the tempering device (7) the glass containers (3) are arranged in a direction of conveyance (6) in columns (4) and are arranged transversely to the direction of conveyance (6) in rows (14),
wherein adjacent columns (4) and rows (14) each are offset relative to one another by a half spacing (150; 149).

30. Apparatus according to claim 29,
**characterised in that** each glass container (3) of each group (10) has the same size spacing (153) from all adjacent glass containers (3) of the group (10).

## Revendications

1. Dispositif (1) pour déposer une couche (2) sur au moins une partie de la surface externe de récipients en verre (3), comprenant un dispositif de thermorégulation (7) qui règle la température des récipients en verre (3) à une température appropriée au revêtement, supérieure à la température ambiante, ayant un dispositif de manipulation ( 13) présentant un dispositif de prise à griffes (12), un groupe (10) de récipients en verre (3) thermorégulés étant respectivement saisissable à un endroit de prise (11) et transportable avec le dispositif de prise à griffes (12), le dispositif de prise à griffes (12) présentant un support (15) déplaçable le long d'un guidage du dispositif de manipulation (13), une unité de prise à griffes (16) étant disposée sur le support (15) pour chacun des récipients en verre (3) du groupe (10), chaque unité de prise à griffes (16) présentant une partie de base (38) et des éléments de prise à griffes (39) disposés sur la partie de base (38) pouvant être commandés entre une position de prise à griffes saisissant le récipient en verre (3) et une position de relâchement libérant le récipient en verre (3), le dispositif (1) présentant en outre un récipient (18) contenant un milieu de revêtement (129), chaque groupe (10) de récipients en verre (3) pouvant être totalement ou partiellement immergé dans ledit milieu de revêtement (129) à l'aide du dispositif de manipulation (13), jusqu'à ce que le milieu de revêtement (129) adhère de la manière voulue aux récipients en verre (3), chaque groupe (10) de récipients en verre (3) revêtus pouvant être retiré du milieu de revêtement (129) et à nouveau transporté à l'aide du dispositif de manipulation (13), chaque groupe ( 10) de récipients en verre (3) pouvant être délivré, en position de relâchement, sur un tapis roulant (22) du dispositif (1) en commandant les éléments de prise à griffes (39), le dispositif de prise à griffes (12) vidé des récipients en verre (3) pouvant être à nouveau transporté à l'endroit de prise (11) à l'aide du dispositif de manipulation (13), le dispositif (1) présentant une zone permettant le durcissement (27) à travers laquelle chaque groupe (10) de récipients en verre (3) revêtus peut être transporté à l'aide du tapis roulant (22) pour le durcissement d'au moins une partie de la couche (2) des récipients en verre (3), et une zone permettant le durcissement du fond (29) étant prévue éventuellement entre le récipient (18) contenant le milieu de revetement (129) et le tapis roulant (22), ladite zone étant conçue pour durcir essentiellement uniquement la couche (2) déposée sur les fonds (31) des récipients en verre (3), alors que, dans ce dernier cas, la zone permettant le durcissement (27) est conçue pour durcir le reste de la couche (2) des récipients en verre (3), **caractérisé en ce qu'**au moins trois éléments de prise à griffes (39) sont placés de manière à être déplaçables sur la partie de base (38) entre la position de prise et de relâchement, **en ce que** chaque élément de prise à griffes (39) présente un bras d'actionnement (42) s'étendant vers l'axe longitudinal (41) de l'unité de prise à griffes (16), et **en ce que** tous les bras d'actionnement (42) de chaque unité de prise à griffes (16) peuvent être actionnés par une unité cylindre piston (48) de l'unité de prise à griffes (16).

2. Dispositif selon la revendication 1, **caractérisé en ce que** le groupe (10) de récipients en verre (3) revêtus retiré du milieu de revêtement (129) peut être déposé à l'aide du dispositif de prise à griffes (12) sur une plaque de dépôt (146), **en ce que** ce groupe (10) peut alors être saisi à l'aide d'un autre dispositif de prise à griffes (147) d'un autre dispositif de manipulation (148), peut être éventuellement transporté à travers la zone permettant le durcissement du fond (29) et peut être placé sur le tapis roulant (22), **en ce que** l'autre dispositif de prise à griffes (147) vidé des récipients en verre (3) peut être à nouveau transporté, à l'aide de l'autre dispositif de manipulation (148), à la plaque de dépôt (146) pour saisir de la plaque de dépôt (146) un autre groupe (10) de récipients en verre (3) revêtus, et **en ce que** l'autre dispositif de prise à griffes (147) présente des unités de prise à griffes (16) selon la revendication 1.

3. Dispositif selon la revendication 1 ou 2, **caractérisé en ce que** chaque élément de prise à griffes (39) est conçu sous forme de segment et collabore de manière étanche en position de prise avec les autres éléments de prise à griffes (39) de l'unité de prise à griffes (16) et le récipient en verre (3) associé.

4. Dispositif selon l'une des revendications 1 à 3, **caractérisé en ce qu'**un piston (47) et une tige de piston (46) de l'unité cylindre piston (48) sont disposés concentriquement et placés sur palier de manière à coulisser dans un cylindre principal (60) et un trou (56) de la partie de base (38), et **en ce que** les bras d'actionnement (42) sont couplés à la tige de piston (46).

5. Dispositif selon l'une des revendications 1 à 4, **caractérisé en ce qu'**un ressort (58) précontraignant les éléments de prise à griffes (39) en leur position de prise est disposé entre la partie de base (38) et un piston (47) de l'unité piston cylindre (48).

6. Dispositif selon l'une des revendications 1 à 5, **caractérisé en ce qu'**une partie piston supérieure (50) de chaque partie de base (38) est guidée de manière coulissante et étanche dans un cylindre principal (60), fixable à un support (15), de l'unité de prise à griffes (16) associée en formant une chambre de cylindre (59).

7. Dispositif selon la revendication 6, **caractérisé en ce qu'**un ressort (62) précontraignant la partie piston supérieure (50) en une position plus profonde est disposé entre la partie piston supérieure (50) et le cylindre principal (60).

8. Dispositif selon la revendication 6 ou 7, **caractérisé en ce que** la partie de base (38) est protégée, en fonctionnement, contre la rotation par rapport au cylindre principal (60) à l'aide d'un assemblage à tenon (63) et mortaise (65) entre la partie de base (38) et le support (15).

9. Dispositif selon la revendication 8, **caractérisé en ce que** la mortaise (65) est un composant d'une coulisse à baïonnette (66) pour le tenon (63) constituant un montage et démontage rapide de l'unité de prise à griffes (16).

10. Dispositif selon l'une des revendications 4 à 9, **caractérisé en ce que** la tige du piston (46) présente un passage concentrique (70), **en ce qu'**une autre tige de piston (71) s'étend dans le passage (70), l'extrémité libre supérieure (72) de celle-ci pouvant être fixée (73) sur la partie de base (38) et l'extrémité inférieure (74) à la hauteur des éléments de prise à griffes (39) supporte un autre piston (75), **en ce qu'**un autre cylindre (76) est guidé de manière coulissante sur l'autre piston (75) et l'autre tige de piston (71), et **en ce que** l'autre cylindre (76) supporte en bas un bouchon (77) qui collabore de manière étanche soit avec un goulot (20) du récipient en verre (3) soit avec des éléments de prise à griffes (39) se trouvant dans leur position de prise.

11. Dispositif selon la revendication 10, **caractérisé en ce qu'**un ressort (80) précontraignant le bouchon (77) en une position plus profonde est disposé entre l'autre cylindre (76) et l'autre tige de piston (71).

12. Dispositif selon la revendication 10 ou 11, **caractérisé en ce que** l'autre tige de piston (71) présente une cavité (81), à travers laquelle on peut amener un fluide de pression sur une face supérieure (82) de l'autre piston (75) pour élever l'autre cylindre (76).

13. Dispositif selon l'une des revendications 6 à 12, **caractérisé en ce que** l'on peut amener un gaz de lavage sous pression dans la chambre du cylindre (59), et **en ce que** l'on peut amener le gaz de lavage par le biais de canaux (91) situés dans la partie piston supérieure (50) dans un passage concentrique (70) de la tige de piston (46) et de là, dans une chambre interne (79) des éléments de prise à griffes (39).

14. Dispositif selon l'une des revendications 6 à 13, **caractérisé en ce que** l'alimentation d'un nombre d'unités de prise à griffes (16) avec de fluide de pression s'effectue par le biais d'un dispositif d'alimentation commun (88), **en ce que** chaque dispositif d'alimentation (88) présente plusieurs conduites (98 à 101) séparées les unes des autres, **en ce que** l'une (100) des conduites (98 à 101) est reliée en continu avec la chambre du cylindre (59), et **en ce que** chacune (88, 99, 101) des autres conduites (98 à 101) est reliée à une ouverture associée (111, 85, 115) dans une paroi latérale (86) du cylindre principal (60).

15. Dispositif selon la revendication 14, **caractérisé en ce que** chaque dispositif d'alimentation (88) peut être relié de manière étanche à une paroi frontale (90) du nombre associé d'unités de prise à griffes (16), et **en ce que** chaque conduite (98 à 101) est reliée en continu à un canal de raccordement (106, 109; 107, 87; 89; 108, 110) du cylindre principal (60) par le biais d'un trou de raccordement (102 à 105) du dispositif d'alimentation (88), chaque canal de raccordement débouchant dans l'ouverture qui lui est associée (111; 85; 89; 115).

16. Dispositif selon l'une des revendications 1 à 15, **caractérisé en ce que** les éléments de prise à griffes (39) en leur position de prise dépassent en direction radiale de chaque coté d'une distance excédentaire (125) le récipient en verre (3) saisi qui lui est associé.

17. Dispositif selon l'une des revendications 1 à 16, **caractérisé en ce que** chaque groupe (10) de récipients en verre (3) peut être immergé simultanément dans au moins un récipient (18) contenant le milieu de revêtement (129), et **en ce que** chaque récipient (18) contient un lit interne fluidisé présentant une poudre (129) comme milieu de revêtement.

18. Dispositif selon la revendication 17, **caractérisé en ce que** chaque récipient (18) présente, en partant de son fond (126), dans cet ordre, une chambre à air (127), une plaque poreuse (128) et un dispositif de désagrégation (130) déplaçable dans la poudre (129).

19. Dispositif selon la revendication 18, **caractérisé en ce qu'**une corbeille à débris (135) pouvant être retirée de la poudre (129) est disposée au-dessus du dispositif de désagrégation (130).

20. Dispositif selon l'une des revendications 17 à 19, **caractérisé en ce qu'**un canal d'aspiration (137) est ouvert sur le lit fluidisé interne le long d'un bord supérieur (136) de chaque récipient (18).

21. Dispositif selon l'une des revendications 1 à 16, **caractérisé en ce que** chaque groupe (10) de récipients en verre (3) peut être simultanément immergé dans au moins un récipient (18) contenant une dispersion comme milieu de revêtement.

22. Dispositif selon l'une des revendications 1 à 21, **caractérisé en ce qu'**on a prévu un dispositif de détection avec lequel on peut constater si et éventuellement combien d'unités de prise à griffes (16) du dispositif de prise à griffes (12) n'ont saisi aucun récipient en verre (3), et **en ce qu'**un entraînement du dispositif de manipulation (13) peut être commandé en fonction du nombre de récipients en verre (3) non saisis de telle manière que les unités de prise à griffes (16) plongent constamment dans le milieu de revêtement (129) jusqu'à une profondeur au moins approximativement égale.

23. Dispositif selon l'une des revendications 1 à 22, **caractérisé en ce qu'**un entraînement du dispositif de manipulation (13) peut être commandé de telle manière que les vitesses auxquelles les récipients en verre (3) sont plongés dans le milieu de revêtement (129) et en sont retirés soient modulées.

24. Dispositif selon l'une des revendications 2 à 23, **caractérisé en ce que** la plaque de dépôt (146) présente des passages (155) et **en ce qu'**une face inférieure (156) de la plaque de dépôt (146) est reliée à une chambre (157) pouvant admettre une sous-pression.

25. Dispositif selon l'une des revendications 1 à 24, **caractérisé en ce que** la zone permettant le durcissement du fond (29) présente un registre de chauffage (30), et **en ce que** le registre de chauffage (30) présente un dispositif de chauffage (138; 139) en face du fond (31) de chaque récipient en verre (3).

26. Dispositif selon la revendication 25, **caractérisé en ce que** ces dispositifs de chauffage (138; 139) en face desquels éventuellement aucun récipient en verre (3) n'est disposé, sont désactivables.

27. Dispositif selon l'une des revendications 1 à 26, **caractérisé en ce que** le tapis roulant (22) présente des zones supports (140), relativement petites et nombreuses, entrant en contact avec les fonds (31) revêtus des récipients en verre (3).

28. Dispositif selon la revendication 27, **caractérisé en ce qu'**au moins les zones supports (140) du tapis roulant (22) doivent être dotées d'un séparateur avant de placer les fonds (31) sur les zones support (140).

29. Dispositif selon l'une des revendications 1 à 28, **caractérisé en ce que**, dans chaque groupe (10) de récipients en verre (3) quittant le dispositif de thermorégulation (7), les récipients en verre (3) sont disposés dans une direction de transport (6) en colonnes (4) et transversalement par rapport à la direction de transport (6) en lignes (14), les colonnes (4) et lignes (14) adjacentes étant décalées respectivement d'une distance correspondant à la moitié de la séparation (150; 149) les unes par rapport aux autres.

30. Dispositif selon la revendication 29, **caractérisé en ce que** chaque récipient en verre (3) de chaque groupe (10) est situé à une distance (153) de grandeur égale par rapport à tous les récipients en verre (3) voisins du groupe (10).
